# EUROPEAN PATENT SPECIFICATION

(11) **EP 4 489 460 B1**
(45) Date of publication and mention of the grant of the patent: **22.04.2026**
(21) Application number: 24186615.1
(22) Date of filing: 04.07.2024
(51) Int. Cl.: H04W 12/106, H04L 9/40, H04W 84/12

(54) **ENHANCED INTEGRITY PROTECTION FOR WIRELESS NETWORKING SYSTEMS**
VERBESSERTER INTEGRITÄTSSCHUTZ FÜR DRAHTLOSE NETZWERKSYSTEME
PROTECTION D'INTÉGRITÉ AMÉLIORÉE POUR SYSTÈMES DE RÉSEAU SANS FIL

(30) Priority: 07.07.2023 US 202363512545 P; 03.07.2024 US 202418763362
(43) Date of publication of application: 08.01.2025
(73) Proprietor: Apple Inc., Cupertino, CA 95014 (US)
(72) Inventor: KNECKT, Jarkko L., Cupertino, 95014 (US); LIU, Yong, Cupertino, 95014 (US); YONG, Su Khiong, Cupertino, 95014 (US); THAKUR, Sidharth R., Cupertino, 95014 (US); WU, Tianyu, Cupertino, 95014 (US); VERMA, Lochan, Cupertino, 95014 (US); WANG, Qi, Cupertino, 95014 (US); HEDAYAT, Ahmad Reza, Cupertino, 95014 (US); JIANG, Jinjing, Cupertino, 95014 (US)
(74) Representative: Bateman, Samuel Alec

(56) References cited:
- US-A1- 2012 289 192
- US-A1- 2019 149 993

## Description

### FIELD

The present application relates to wireless communications, including techniques for wireless communication among wireless stations and/or access points in a wireless networking system.

### DESCRIPTION OF THE RELATED ART

Wireless communication systems are rapidly growing in usage. Further, wireless communication technology has evolved from voice-only communications to also include the transmission of data, such as Internet and multimedia content. A popular short/intermediate range wireless communication standard is wireless local area network (WLAN). Most modern WLANs are based on the Institute of Electrical and Electronics Engineers (IEEE) 802.11 standard (and/or 802.11, for short) and are marketed under the Wi-Fi brand name. WLAN networks link one or more devices to a wireless access point, which in turn provides connectivity to the wider area Internet.

In 802.11 systems, devices that wirelessly connect to each other are referred to as "stations", "mobile stations", "user devices", "user equipment", or STA or UE for short. Wireless stations can be either wireless access points or wireless clients (and/or mobile stations). Access points (APs), which are also referred to as wireless routers, act as base stations for the wireless network. APs transmit and receive radio frequency signals for communication with wireless client devices. APs can also couple to the Internet in a wired and/or wireless fashion. Wireless clients operating on an 802.11 network can be any of various devices such as laptops, tablet devices, smart phones, smart watches, or fixed devices such as desktop computers. Wireless client devices are referred to herein as user equipment (and/or UE for short). Some wireless client devices are also collectively referred to herein as mobile devices or mobile stations (although, as noted above, wireless client devices overall can be stationary devices as well).

Mobile electronic devices can take the form of smart phones or tablets that a user typically carries. Wearable devices (also referred to as accessory devices) are a newer form of mobile electronic device, one example being smart watches. Additionally, low-cost low-complexity wireless devices intended for stationary or nomadic deployment are also proliferating as part of the developing "Internet of Things". In other words, there is an increasingly wide range of desired device complexities, capabilities, traffic patterns, and other characteristics.

Some WLANs can utilize multi-link operation (MLO), e.g., using a plurality of channels (e.g., links) concurrently. APs and/or STAs capable of MLO can be referred to as multi-link devices (MLD). For example, APs capable of MLO can be referred to as AP-MLDs and STAs capable of MLO that are not acting as APs can be referred to as non-AP MLDs. Improvements in the field are desired.

US 2012/0289192 A1 generally relates to wireless communications and, more particularly, to protecting the integrity of certain wireless transmissions.

US 2019/0149993 A1 relates generally to wireless communications, and in particular embodiments, to techniques and mechanisms for providing UE capability for support of security protection on bearers.

### SUMMARY

Embodiments described herein relate to systems, methods, apparatuses, and mechanisms for enhanced integrity protection in wireless networking systems.

In some embodiments, a station (STA) can receive, from an access point (AP), an integrity protection (IP) capability request and transmit an IP capability response to the AP. The STA can receive, from the AP, one or more downlink (DL) frames comprising at least one adjusted parameter field of a plurality of parameter fields. The STA can verify, based on at least one value of the adjusted parameter field or one or more parameter fields of the plurality of parameter fields, that the one or more DL frames have been correctly received from the AP.

According to some embodiments, the one or more DL frames can include a Header Message Integrity Check (MIC) field and Frame Number (FN) field. Additionally or alternatively, as part of verifying that the one or more DL frames have been correctly received from the AP, the method can further include performing an integrity checksum calculation using the Header MIC field.

In some embodiments, the one or more DL frames can be associated with a group address and the method can further include receiving, from the AP, a Headers MIC value associated with a group key. Additionally, the method can include determining, as part of verifying that the one or more DL frames have been correctly received from the AP, that the Header MIC value associated with the group key matches a value of the Headers MIC field.

According to some embodiments, the plurality of parameter fields can include at least one address and the method can further include determining, based on a comparison of the at least one address to an address of the STA whether or not the STA is an intended recipient of the one or more DL frames or whether or not the AP is a correct transmitter of the one or more DL frames.

In some instances, the one or more DL frames can be a trigger frame or a block acknowledgement (BA) frame. In some embodiments, at least one of the plurality of parameter fields can be adjusted to a value of zero. Additionally or alternatively, a value of one of the plurality of parameter fields can be increased by one.

In other embodiments, an apparatus can include at least one processor configured to cause an access point (AP) to receive, from a station (STA), an integrity protection (IP) capability request. The at least one processor can be further configured to cause the AP to transmit, to the STA, an IP capability response indicating that the AP supports one or more IP capabilities. The at least one processor can be further configured to cause the AP to receive, from the STA, one or more uplink (UL) frames, wherein the one or more UL frames comprise at least one adjusted parameter field of a plurality of parameter fields. Additionally or alternatively, the at least one processor can be further configured to cause the AP to verify, based on at least one value of the adjusted parameter field or one or more parameter fields of the plurality of parameter fields, that the one or more UL frames have been correctly received from the STA.

In some embodiments, as part of verifying that the one or more UL frames have been correctly received from the STA, the at least one processor can be further configured to cause the AP to determine, based on a value of a Power Management (PM) field of the one or more UL frames, that the AP is an intended recipient of the one or more UL frames transmitted from the STA. Furthermore, the at least one adjusted parameter field of the plurality of parameter fields can be adjusted to a value of zero or increased by a value of one.

In some embodiments, the one or more UL frames can be quality of service (QoS) null frames which can include a Protected Medium Access Control (MAC) Header field and a High Throughput (HT) Control field. Additionally or alternatively, the one or more QoS null frames can further include a Header Message Integrity Check (MIC) field and a Frame Number (FN) field. Furthermore, the Header MIC field can allow for an integrity checksum to be calculated by the AP to verify that the one or more QoS null frames have been correctly received by the STA.

In some embodiments, an access point (non-AP) can include a radio and a processor operably coupled to the radio and configured to cause the AP to transmit, to a non-access point (non-AP), an integrity protection (IP) capability request. The processor can be further configured to cause the AP to receive an IP capability response from the non-AP and adjust, based at least in part on the non-AP supporting one or more IP capabilities, a value of at least one parameter field of one or more downlink (DL) frames. The processor can be further configured to cause the AP to transmit, to the non-AP, the one or more DL frames, wherein the at least one parameter field is adjusted to provide IP to the one or more DL frames.

According to some embodiments, the one or more DL frames can be beacons transmitted during one or more beacon periods. Additionally or alternatively, the beacons can include one or more beacon integrity protection number (BIPNs) and values of the one or more BIPNs can be respectively increased by one for beacons transmitted subsequent to a first beacon period. Furthermore, the one or more BIPNs and one or more respective frame numbers (FNs) can be included in one or more respective physical packet data unit (PPDUs), wherein the one or more BIPNs can be six octets in length, and wherein the one or more respective FNs can be one, two, or three octets in length.

This Summary is intended to provide a brief overview of some of the subject matter described in this document. Accordingly, it will be appreciated that the above-described features are merely examples and should not be construed to narrow the scope of the subject matter described herein in any way. Other features, aspects, and advantages of the subject matter described herein will become apparent from the following Detailed Description, Figures, and Claims.

### BRIEF DESCRIPTION OF THE DRAWINGS

A better understanding of the present subject matter can be obtained when the following detailed description of the embodiments is considered in conjunction with the following drawings.
Figure 1 illustrates an example wireless communication system, according to some embodiments.
Figure 2 illustrates an example simplified block diagram of a wireless device, according to some embodiments.
Figure 3 illustrates an example WLAN communication system, according to some embodiments.
Figure 4 illustrates an example simplified block diagram of a WLAN Access Point (AP), according to some embodiments.
Figure 5 illustrates an example simplified block diagram of a wireless station (STA), according to some embodiments.
Figure 6 illustrates an example simplified block diagram of a wireless node, according to some embodiments.
Figures 7-8 illustrates examples of MLDs, according to some embodiments.
Figure 9 illustrates an example structure of a physical layer protocol data unit (PPDU), according to some embodiments.
Figures 10A-B illustrates an example structure of a data medium access control (MAC) protocol data unit (MPDU), example control fields, and associated integrity protection (IP) schemes, according to some embodiments.
Figure 11 illustrates an example integrity protection scheme per PPDU, according to some embodiments.
Figure 12 is a communication flow diagram illustrating an example method of integrity protection techniques for MPDUs, according to some embodiments.
Figures 13A-C illustrates example aspects of integrity protection techniques for MPDUs, according to some embodiments.
Figure 14 illustrates example aspects of integrity protection techniques involving access point (AP) and non-AP multi-link devices (MLDs), according to some embodiments.
Figures 15A-B illustrate example aspects of integrity protection techniques related to beacon signaling, according to some embodiments.
Figures 16A-C illustrate example aspects of integrity protection techniques associated with quality of service (QoS) null frames, according to some embodiments.
Figures 17A-B illustrate example aspects of integrity protection techniques associated with control frames, according to some embodiments.
Figures 18A-B illustrate example aspects of integrity protection techniques for multi-station (multi-STA) block acknowledgement (ACK) frames, according to some embodiments.
Figures 19A-B illustrate example aspects of integrity protection techniques associated with trigger frames, according to some embodiments.

While the features described herein are susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the scope of the subject matter as defined by the appended claims.

### DETAILED DESCRIPTION

### Acronyms

Various acronyms are used throughout the present application. Definitions of the most prominently used acronyms that can appear throughout the present application are provided below:
**UE:** User Equipment
**AP:** Access Point
**STA:** Wireless Station
**TX:** Transmission/Transmit
**RX:** Reception/Receive
**DL:** Downlink
**UL:** Uplink
**MLD:** Multi-link Device
**LAN:** Local Area Network
**WLAN:** Wireless LAN
**RAT:** Radio Access Technology
**ACK:** Acknowledgment
**BA:** Block Acknowledgment
**QoS:** Quality of Service
**OTA:** Over the Air
**SU:** Single-User
**MU:** Multi-User
**MAC:** Medium/Media Access Control
**OMA:** Over the Air MAC
**CPE:** Client Privacy Enhanced
**BSS:** Basic Service Set
**BSSID:** Basic Service Set Identifier
**SN:** Sequence Number
**PN:** Packet Number
**FN:** Frame Number
**TID:** Traffic Identifier
**AID:** Association Identifier
**SSID:** Service Set Identifier
**SAP:** Service Access Point
**MPDU:** MAC-level Protocol Data Unit
**A-MPDU:** Aggregated MPDU
**MSDU:** MAC Service Data Unit
**SA:** Sender Address
**DA:** Destination Address
**PS:** Power Save
**PM:** Power Management
**PPDU:** Physical Protocol Data Unit
**BA:** Block Acknowledgement
**TXOP:** Transmission Opportunity
**TWT:** Target Wake Time
**HT:** High Throughput
**EHT:** Extremely High Throughput
**ID:** Identifier
**HTC:** High Throughput Control
**MIC:** Message Integrity Check
**CRC:** Cyclic Redundancy Check
**FCS:** Frame Checksum
**DS:** Distribution System
**EOSP:** End of Service Period
**OMI:** Operating Mode Indication
**NSS:** Number of Spatial Streams
**BW:** Bandwidth
**CCMP:** Counter Mode with Cipher Block Chaining Message Authentication Code Protocol
**EOF:** End of Frame
**BIGTK:** Beacon Integrity Group Temporal Key
**BIPN:** Beacon Integrity Packet Number
**TBTT:** Target Beacon Transmission Time
**ICF:** Initial Control Frame
**CTS:** Clear to Send
**EMSLR:** Enhanced Multi-Link Single Radio
**RU:** Resource Unit
**SS:** Synchronization Signal
**GCMP:** Galois/Counter Mode Protection
**HDR:** High Data Rate
**MHP:** Modulated Hermite Pulse
**BAN:** Body Area Network
**UWB:** Ultra-Wideband

### Terminology

The following is a glossary of terms used in this disclosure:
**Memory Medium** - Any of various types of non-transitory memory devices or storage devices. The term "memory medium" is intended to include an installation medium, e.g., a CD-ROM, floppy disks, or tape device; a computer system memory or random access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The memory medium can include other types of non-transitory memory as well or combinations thereof. In addition, the memory medium can be located in a first computer system in which the programs are executed, or can be located in a second different computer system which connects to the first computer system over a network, such as the Internet. In the latter instance, the second computer system can provide program instructions to the first computer for execution. The term "memory medium" can include two or more memory mediums which can reside in different locations, e.g., in different computer systems that are connected over a network. The memory medium can store program instructions (e.g., embodied as computer programs) that can be executed by one or more processors.
**Carrier Medium** - a memory medium as described above, as well as a physical transmission medium, such as a bus, network, and/or other physical transmission medium that conveys signals such as electrical, electromagnetic, or digital signals.
**Computer System** - any of various types of computing or processing systems, including a personal computer system (PC), mainframe computer system, workstation, network appliance, Internet appliance, personal digital assistant (PDA), television system, grid computing system, or other device or combinations of devices. In general, the term "computer system" can be broadly defined to encompass any device (and/or combination of devices) having at least one processor that executes instructions from a memory medium.
**Mobile Device (and/or Mobile Station)** - any of various types of computer systems devices which are mobile or portable and which performs wireless communications using WLAN communication. Examples of mobile devices include mobile telephones or smart phones (e.g., iPhone^{™}, Android^{™}-based phones), and tablet computers such as iPad^{™}, Samsung Galaxy^{™}, etc. Various other types of devices would fall into this category if they include Wi-Fi or both cellular and Wi-Fi communication capabilities, such as laptop computers (e.g., MacBook^{™}), portable gaming devices (e.g., Nintendo DS^{™}, PlayStation Portable^{™}, Gameboy Advance^{™}, iPhone^{™}), portable Internet devices, and other handheld devices, as well as wearable devices such as smart watches, smart glasses, headphones, pendants, earpieces, etc. In general, the term "mobile device" can be broadly defined to encompass any electronic, computing, and/or telecommunications device (and/or combination of devices) which is easily transported by a user and capable of wireless communication using WLAN or Wi-Fi.
**Wireless Device (and/or Wireless Station)** - any of various types of computer systems devices which performs wireless communications using WLAN communications. As used herein, the term "wireless device" can refer to a mobile device, as defined above, or to a stationary device, such as a stationary wireless client or a wireless base station. For example, a wireless device can be any type of wireless station of an 802.11 system, such as an access point (AP) or a client station (STA or UE). Further examples include televisions, media players (e.g., AppleTV^{™}, Roku^{™}, Amazon FireTV^{™}, Google Chromecast^{™}, etc.), refrigerators, laundry machines, thermostats, and so forth.
**WLAN** - The term "WLAN" has the full breadth of its ordinary meaning, and at least includes a wireless communication network or RAT that is serviced by WLAN access points and which provides connectivity through these access points to the Internet. Most modern WLANs are based on IEEE 802.11 standards and are marketed under the name "Wi-Fi". A WLAN network is different from a cellular network.
**Processing Element** - refers to various implementations of digital circuitry that perform a function in a computer system. Additionally, processing element can refer to various implementations of analog or mixed-signal (combination of analog and digital) circuitry that perform a function (and/or functions) in a computer or computer system. Processing elements include, for example, circuits such as an integrated circuit (IC), ASIC (Application Specific Integrated Circuit), portions or circuits of individual processor cores, entire processor cores, individual processors, programmable hardware devices such as a field programmable gate array (FPGA), and/or larger portions of systems that include multiple processors.
**Automatically** - refers to an action or operation performed by a computer system (e.g., software executed by the computer system) or device (e.g., circuitry, programmable hardware elements, ASICs, etc.), without user input directly specifying or performing the action or operation. Thus, the term "automatically" is in contrast to an operation being manually performed or specified by the user, where the user provides input to directly perform the operation. An automatic procedure can be initiated by input provided by the user, but the subsequent actions that are performed "automatically" are not specified by the user, e.g., are not performed "manually", where the user specifies each action to perform. For example, a user filling out an electronic form by selecting each field and providing input specifying information (e.g., by typing information, selecting check boxes, radio selections, etc.) is filling out the form manually, even though the computer system must update the form in response to the user actions. The form can be automatically filled out by the computer system where the computer system (e.g., software executing on the computer system) analyzes the fields of the form and fills in the form without any user input specifying the answers to the fields. As indicated above, the user can invoke the automatic filling of the form, but is not involved in the actual filling of the form (e.g., the user is not manually specifying answers to fields but rather they are being automatically completed). The present specification provides various examples of operations being automatically performed in response to actions the user has taken.
**Concurrent** - refers to parallel execution or performance, where tasks, processes, signaling, messaging, or programs are performed in an at least partially overlapping manner. For example, concurrency can be implemented using "strong" or strict parallelism, where tasks are performed (at least partially) in parallel on respective computational elements, or using "weak parallelism", where the tasks are performed in an interleaved manner, e.g., by time multiplexing of execution threads.
**Configured to** - Various components can be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors can be configured to electrically connect a module to another module, even when the two modules are not connected). In some contexts, "configured to" can be a broad recitation of structure generally meaning "having circuitry that" performs the task or tasks during operation. As such, the component can be configured to perform the task even when the component is not currently on. In general, the circuitry that forms the structure corresponding to "configured to" can include hardware circuits.

Various components can be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

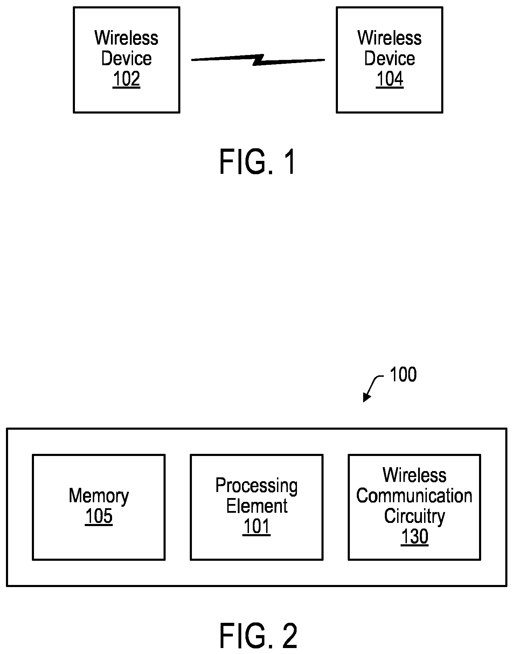

### Figures 1-2 - Wireless Communication System

Figure 1 illustrates an exemplary (and simplified) wireless communication system in which aspects of this disclosure can be implemented. It is noted that the system of Figure 1 is merely one example of a possible system, and embodiments of this disclosure can be implemented in any of various systems, as desired.

As shown, the exemplary wireless communication system includes a ("first") wireless device 102 in communication with another ("second") wireless device. The first wireless device 102 and the second wireless device 104 can communicate wirelessly using any of a variety of wireless communication techniques, potentially including ranging wireless communication techniques.

As one possibility, the first wireless device 102 and the second wireless device 104 can perform ranging using wireless local area networking (WLAN) communication technology (e.g., IEEE 802.11 / Wi-Fi based communication) and/or techniques based on WLAN wireless communication. One or both of the wireless device 102 and the wireless device 104 can also be capable of communicating via one or more additional wireless communication protocols, such as any of Bluetooth (BT), Bluetooth Low Energy (BLE), near field communication (NFC), LTE, LTE-Advanced (LTE-A), NR, GPS, ultra-wideband (UWB), etc.

The wireless devices 102 and 104 can be any of a variety of types of wireless device. As one possibility, one or more of the wireless devices 102 and/or 104 can be a substantially portable wireless user equipment (UE) device, such as a smart phone, handheld device, a wearable device such as a smart watch, a tablet, a motor vehicle, or virtually any type of wireless device. As another possibility, one or more of the wireless devices 102 and/or 104 can be a substantially stationary device, such as a set top box, media player (e.g., an audio or audiovisual device), gaming console, desktop computer, appliance, door, access point, base station, or any of a variety of other types of devices.

Each of the wireless devices 102 and 104 can include wireless communication circuitry configured to facilitate the performance of wireless communication, which can include various digital and/or analog radio frequency (RF) components, a processor that is configured to execute program instructions stored in memory, a programmable hardware element such as a field-programmable gate array (FPGA), and/or any of various other components. The wireless device 102 and/or the wireless device 104 can perform any of the method embodiments described herein, or any portion of any of the method embodiments described herein, using any or all of such components.

Each of the wireless devices 102 and 104 can include one or more antennas for communicating using one or more wireless communication protocols. In some cases, one or more parts of a receive and/or transmit chain can be shared between multiple wireless communication standards; for example, a device might be configured to communicate using either of Bluetooth or Wi-Fi using partially or entirely shared wireless communication circuitry (e.g., using a shared radio or at least shared radio components). The shared communication circuitry can include a single antenna, or can include multiple antennas (e.g., for MIMO) for performing wireless communications. Alternatively, a device can include separate transmit and/or receive chains (e.g., including separate antennas and other radio components) for each wireless communication protocol with which it is configured to communicate. As a further possibility, a device can include one or more radios or radio components which are shared between multiple wireless communication protocols, and one or more radios or radio components which are used exclusively by a single wireless communication protocol. For example, a device might include a shared radio for communicating using one or more of LTE, and/or 5G NR, and separate radios for communicating using each of Wi-Fi and Bluetooth. Other configurations are also possible.

As previously noted, aspects of this disclosure can be implemented in conjunction with the wireless communication system of Figure 1. For example, a wireless device (e.g., either of wireless devices 102 or 104) can be configured to perform methods for robust discovery of a new access point (AP) in AP MLD, robust link addition to an AP MLD association, AP beaconing modes when the AP is added or deleted to/from an AP MLD, and robust BSS transition management (BTM) signaling to steer a non-AP MLD to a best AP MLD and to most suitable APs, as well as privacy improvements for associated non-AP MLD.

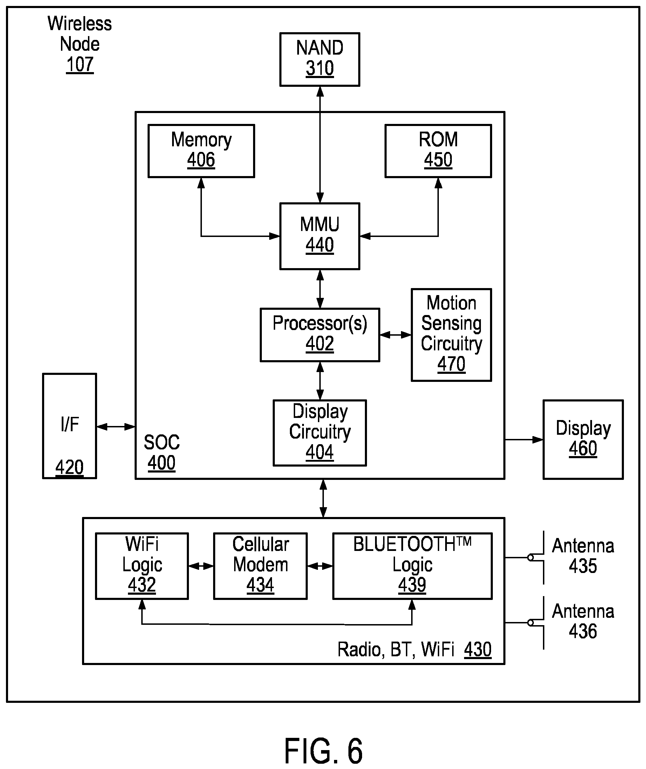

Figure 6 illustrates an exemplary wireless device 100 (e.g., corresponding to wireless devices 102 and/or 104) that can be configured for use in conjunction with various aspects of the present disclosure. The device 100 can be any of a variety of types of devices and can be configured to perform any of a variety of types of functionality. The device 100 can be a substantially portable device or can be a substantially stationary device, potentially including any of a variety of types of devices. The device 100 can be configured to perform one or more ranging wireless communication techniques or features, such as any of the techniques or features illustrated and/or described subsequently herein with respect to any or all of the Figures.

As shown, the device 100 can include a processing element 101. The processing element can include or be coupled to one or more memory elements. For example, the device 100 can include one or more memory media (e.g., memory 105), which can include any of a variety of types of memory and can serve any of a variety of functions. For example, memory 105 could be RAM serving as a system memory for processing element 101. Other types and functions are also possible.

Additionally, the device 100 can include wireless communication circuitry 130. The wireless communication circuitry can include any of a variety of communication elements (e.g., antenna(s) for wireless communication, analog and/or digital communication circuitry/controllers, etc.) and can enable the device to wirelessly communicate using one or more wireless communication protocols.

Note that in some cases, the wireless communication circuitry 130 can include its own processing element (e.g., a baseband processor), e.g., in addition to the processing element 101. For example, the processing element 101 can be an 'application processor' whose primary function can be to support application layer operations in the device 100, while the wireless communication circuitry 130 can be a 'baseband processor' whose primary function can be to support baseband layer operations (e.g., to facilitate wireless communication between the device 100 and other devices) in the device 100. In other words, in some cases the device 100 can include multiple processing elements (e.g., can be a multi-processor device). Other configurations (e.g., instead of or in addition to an application processor / baseband processor configuration) utilizing a multi-processor architecture are also possible.

The device 100 can additionally include any of a variety of other components (not shown) for implementing device functionality, depending on the intended functionality of the device 100, which can include further processing and/or memory elements (e.g., audio processing circuitry), one or more power supply elements (which can rely on battery power and/or an external power source) user interface elements (e.g., display, speaker, microphone, camera, keyboard, mouse, touchscreen, etc.), and/or any of various other components.

The components of the device 100, such as processing element 101, memory 105, and wireless communication circuitry 130, can be operatively coupled via one or more interconnection interfaces, which can include any of a variety of types of interfaces, possibly including a combination of multiple types of interface. As one example, a USB high-speed inter-chip (HSIC) interface can be provided for inter-chip communications between processing elements. Alternatively (and/or in addition), a universal asynchronous receiver transmitter (UART) interface, a serial peripheral interface (SPI), inter-integrated circuit (I2C), system management bus (SMBus), and/or any of a variety of other communication interfaces can be used for communications between various device components. Other types of interfaces (e.g., intra-chip interfaces for communication within processing element 101, peripheral interfaces for communication with peripheral components within or external to device 100, etc.) can also be provided as part of device 100.

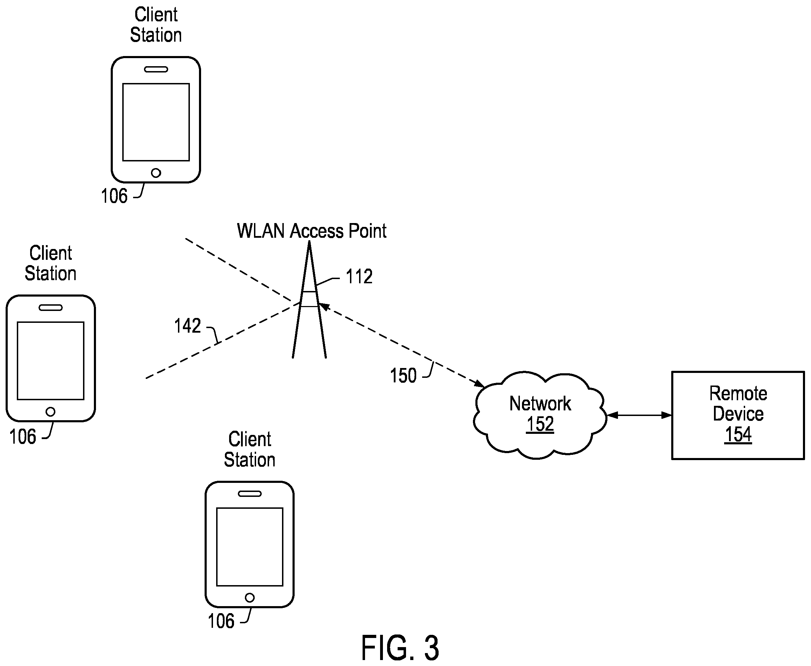

### Figure 3 - WLAN System

Figure 3 illustrates an example WLAN system according to some embodiments. As shown, the exemplary WLAN system includes a plurality of wireless client stations or devices (e.g., STAs or user equipment (UEs)), 106 that are configured to communicate over a wireless communication channel 142 with an Access Point (AP) 112. The AP 112 can be a Wi-Fi access point. The AP 112 can communicate via a wired and/or a wireless communication channel 150 with one or more other electronic devices (not shown) and/or another network 152, such as the Internet. Additional electronic devices, such as the remote device 154, can communicate with components of the WLAN system via the network 152. For example, the remote device 154 can be another wireless client station, a server associated with an application executing on one of the STAs 106, etc. The WLAN system can be configured to operate according to any of various communications standards, such as the various IEEE 802.11 standards. In some embodiments, at least one wireless device 106 is configured to communicate directly with one or more neighboring mobile devices, without use of the access point 112.

Further, in some embodiments, a wireless device 106 (which can be an exemplary implementation of device 100) can be configured to perform methods for robust discovery of a new access point (AP) in AP MLD, robust link addition to an AP MLD association, AP beaconing modes when the AP is added or deleted to/from an AP MLD, and robust BSS transition management (BTM) signaling to steer a non-AP MLD to a best AP MLD and to most suitable APs, as well as privacy improvements for associated non-AP MLD.

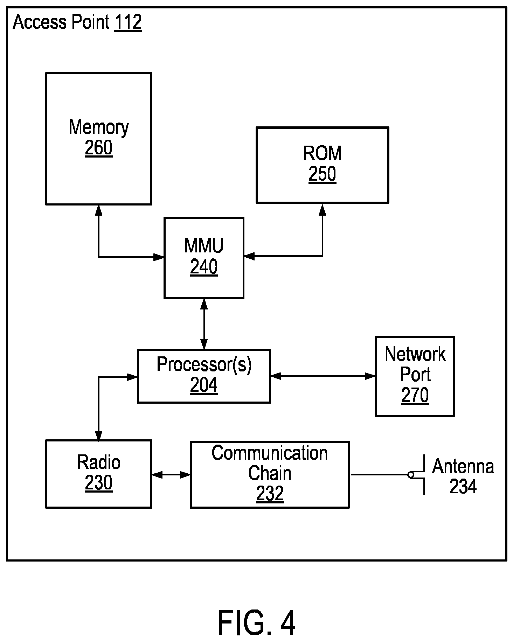

### Figure 4 - Access Point Block Diagram

Figure 4 illustrates an exemplary block diagram of an access point (AP) 112, which can be one possible exemplary implementation of the device 100 illustrated in Figure 4. It is noted that the block diagram of the AP of Figure 4 is only one example of a possible system. As shown, the AP 112 can include processor(s) 204 which can execute program instructions for the AP 112. The processor(s) 204 can also be coupled (directly or indirectly) to memory management unit (MMU) 240, which can be configured to receive addresses from the processor(s) 204 and to translate those addresses to locations in memory (e.g., memory 260 and read only memory (ROM) 250) or to other circuits or devices.

The AP 112 can include at least one network port 270. The network port 270 can be configured to couple to a wired network and provide a plurality of devices, such as mobile devices 106, access to the Internet. For example, the network port 270 (and/or an additional network port) can be configured to couple to a local network, such as a home network or an enterprise network. For example, port 270 can be an Ethernet port. The local network can provide connectivity to additional networks, such as the Internet.

The AP 112 can include at least one antenna 234, which can be configured to operate as a wireless transceiver and can be further configured to communicate with mobile device 106 via wireless communication circuitry 230. The antenna 234 communicates with the wireless communication circuitry 230 via communication chain 232. Communication chain 232 can include one or more receive chains, one or more transmit chains or both. The wireless communication circuitry 230 can be configured to communicate via Wi-Fi or WLAN, e.g., 802.11. The wireless communication circuitry 230 can also, or alternatively, be configured to communicate via various other wireless communication technologies, including, but not limited to, Long-Term Evolution (LTE), LTE Advanced (LTE-A), UWB, etc., for example when the AP is co-located with a base station in case of a small cell, or in other instances when it can be desirable for the AP 112 to communicate via various different wireless communication technologies.

Further, in some embodiments, as further described below, AP 112 can be configured to perform methods for robust discovery of a new access point (AP) in AP MLD, robust link addition to an AP MLD association, AP beaconing modes when the AP is added or deleted to/from an AP MLD, and robust BSS transition management (BTM) signaling to steer a non-AP MLD to a best AP MLD and to most suitable APs, as well as privacy improvements for associated non-AP MLD.

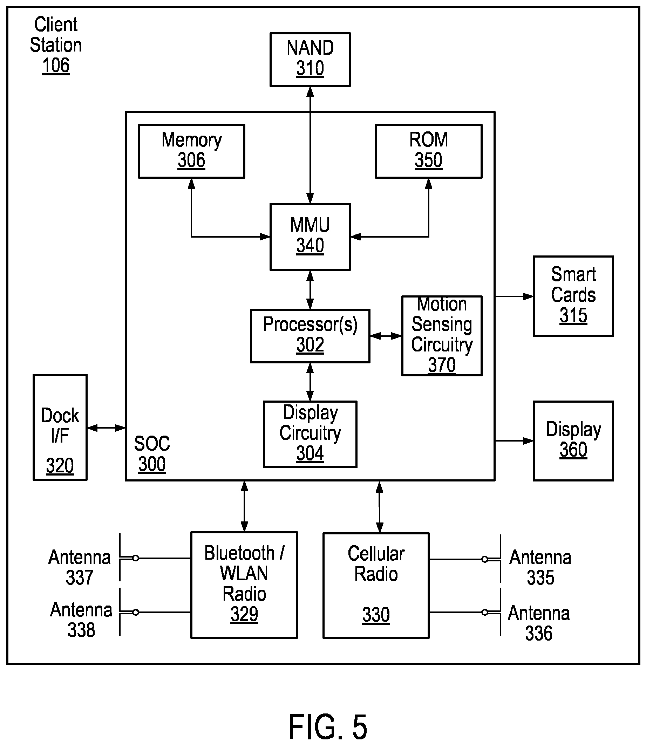

### Figure 5 - Client Station Block Diagram

Figure 5 illustrates an example simplified block diagram of a client station 106, which can be one possible exemplary implementation of the device 100 illustrated in Figure 4. According to embodiments, client station 106 can be a user equipment (UE) device, a mobile device or mobile station, and/or a wireless device or wireless station. As shown, the client station 106 can include a system on chip (SOC) 300, which can include portions for various purposes. The SOC 300 can be coupled to various other circuits of the client station 106. For example, the client station 106 can include various types of memory (e.g., including NAND flash 310), a connector interface (I/F) (and/or dock) 320 (e.g., for coupling to a computer system, dock, charging station, etc.), the display 360, cellular communication circuitry (e.g., cellular radio) 330 such as for 5G NR, LTE, UWB, etc., and short to medium range wireless communication circuitry (e.g., Bluetooth^{™}/WLAN radio) 329 (e.g., Bluetooth^{™} and WLAN circuitry). The client station 106 can further include one or more smart cards 315 that incorporate SIM (Subscriber Identity Module) functionality, such as one or more UICC(s) (Universal Integrated Circuit Card(s)). The cellular communication circuitry 330 can couple to one or more antennas, such as antennas 335 and 336 as shown. The short to medium range wireless communication circuitry 329 can also couple to one or more antennas, such as antennas 337 and 338 as shown. Alternatively, the short to medium range wireless communication circuitry 329 can couple to the antennas 335 and 336 in addition to, or instead of, coupling to the antennas 337 and 338. The short to medium range wireless communication circuitry 329 can include multiple receive chains and/or multiple transmit chains for receiving and/or transmitting multiple spatial streams, such as in a multiple-input multiple output (MIMO) configuration. Some or all components of the short to medium range wireless communication circuitry 329 and/or the cellular communication circuitry 330 can be used for ranging communications, e.g., using WLAN, Bluetooth, and/or cellular communications.

As shown, the SOC 300 can include processor(s) 302, which can execute program instructions for the client station 106 and display circuitry 304, which can perform graphics processing and provide display signals to the display 360. The SOC 300 can also include motion sensing circuitry 370 which can detect motion of the client station 106, for example using a gyroscope, accelerometer, and/or any of various other motion sensing components. The processor(s) 302 can also be coupled to memory management unit (MMU) 340, which can be configured to receive addresses from the processor(s) 302 and translate those addresses to locations in memory (e.g., memory 306, read only memory (ROM) 350, NAND flash memory 310) and/or to other circuits or devices, such as the display circuitry 304, cellular communication circuitry 330, short range wireless communication circuitry 329, connector interface (I/F) 320, and/or display 360. The MMU 340 can be configured to perform memory protection and page table translation or set up. In some embodiments, the MMU 340 can be included as a portion of the processor(s) 302.

As noted above, the client station 106 can be configured to communicate wirelessly directly with one or more neighboring client stations. The client station 106 can be configured to communicate according to a WLAN RAT for communication in a WLAN network, such as that shown in Figure 3 or for ranging as shown in Figure 1.

As described herein, the client station 106 can include hardware and software components for implementing the features described herein. For example, the processor 302 of the client station 106 can be configured to implement part or all of the features described herein, e.g., by executing program instructions stored on a memory medium (e.g., a non-transitory computer-readable memory medium). Alternatively (and/or in addition), processor 302 can be configured as a programmable hardware element, such as an FPGA (Field Programmable Gate Array), or as an ASIC (Application Specific Integrated Circuit). Alternatively (and/or in addition) the processor 302 of the UE 106, in conjunction with one or more of the other components 300, 304, 306, 310, 315, 320,329, 330, 335, 336, 337, 338, 340, 350, 360, 370 can be configured to implement part or all of the features described herein.

In addition, as described herein, processor 302 can include one or more processing elements. Thus, processor 302 can include one or more integrated circuits (ICs) that are configured to perform the functions of processor 302. In addition, each integrated circuit can include circuitry (e.g., first circuitry, second circuitry, etc.) configured to perform the functions of processor(s) 204.

Further, as described herein, cellular communication circuitry 330 and short-range wireless communication circuitry 329 can each include one or more processing elements. In other words, one or more processing elements can be included in cellular communication circuitry 330 and also in short range wireless communication circuitry 329. Thus, each of cellular communication circuitry 330 and short-range wireless communication circuitry 329 can include one or more integrated circuits (ICs) that are configured to perform the functions of cellular communication circuitry 330 and short-range wireless communication circuitry 329, respectively. In addition, each integrated circuit can include circuitry (e.g., first circuitry, second circuitry, etc.) configured to perform the functions of cellular communication circuitry 330 and short-range wireless communication circuitry 329.

### Figure 6 - Wireless Node Block Diagram

Figure 6 illustrates one possible block diagram of a wireless node 107, which can be one possible exemplary implementation of the device 100 illustrated in Figure 6. As shown, the wireless node 107 can include a system on chip (SOC) 400, which can include portions for various purposes. For example, as shown, the SOC 400 can include processor(s) 402 which can execute program instructions for the wireless node 107, and display circuitry 404 which can perform graphics processing and provide display signals to the display 460. The SOC 400 can also include motion sensing circuitry 470 which can detect motion of the wireless node 107, for example using a gyroscope, accelerometer, and/or any of various other motion sensing components. The processor(s) 402 can also be coupled to memory management unit (MMU) 440, which can be configured to receive addresses from the processor(s) 402 and translate those addresses to locations in memory (e.g., memory 406, read only memory (ROM) 450, flash memory 410). The MMU 440 can be configured to perform memory protection and page table translation or set up. In some embodiments, the MMU 440 can be included as a portion of the processor(s) 402.

As shown, the SOC 400 can be coupled to various other circuits of the wireless node 107. For example, the wireless node 107 can include various types of memory (e.g., including NAND flash 410), a connector interface 420 (e.g., for coupling to a computer system, dock, charging station, etc.), the display 460, and wireless communication circuitry 430 (e.g., for 5G NR, LTE, LTE-A, Bluetooth, Wi-Fi, NFC, GPS, UWB, etc.).

The wireless node 107 can include at least one antenna, and in some embodiments, multiple antennas 435 and 436, for performing wireless communication with base stations and/or other devices. For example, the wireless node 107 can use antennas 435 and 436 to perform the wireless communication. As noted above, the wireless node 107 can in some embodiments be configured to communicate wirelessly using a plurality of wireless communication standards or radio access technologies (RATs).

The wireless communication circuitry 430 can include Wi-Fi Logic 432, a Cellular Modem 434, and Bluetooth Logic 439. The Wi-Fi Logic 432 is for enabling the wireless node 107 to perform Wi-Fi communications, e.g., on an 802.11 network. The Bluetooth Logic 439 is for enabling the wireless node 107 to perform Bluetooth communications. The cellular modem 434 can be capable of performing cellular communication according to one or more cellular communication technologies. Some or all components of the wireless communication circuitry 430 can be used for ranging communications, e.g., using WLAN, Bluetooth, and/or cellular communications.

As described herein, wireless node 107 can include hardware and software components for implementing embodiments of this disclosure. For example, one or more components of the wireless communication circuitry 430 (e.g., Wi-Fi Logic 432) of the wireless node 107 can be configured to implement part or all of the methods described herein, e.g., by a processor executing program instructions stored on a memory medium (e.g., a non-transitory computer-readable memory medium), a processor configured as an FPGA (Field Programmable Gate Array), and/or using dedicated hardware components, which can include an ASIC (Application Specific Integrated Circuit).

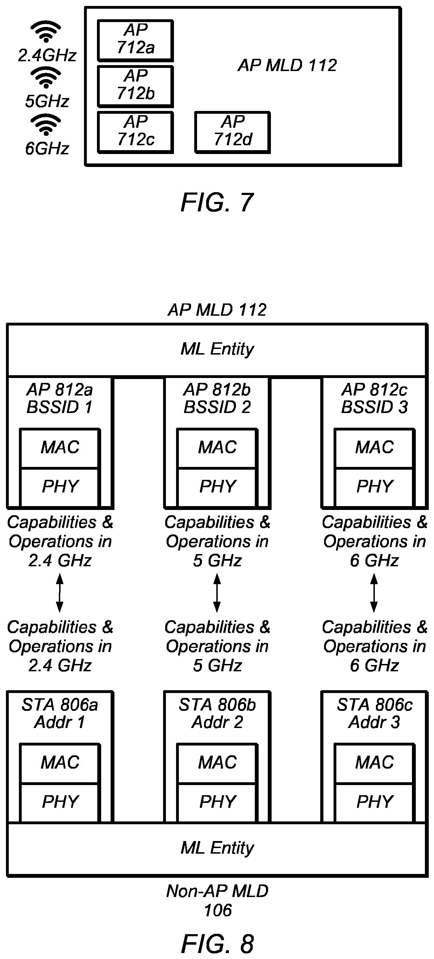

### Figures 7-8 - Multi-link Device (MLD) Operation

IEEE and/or 802.11 (e.g., 802.11bn) can include MLD capabilities. In current implementations, an access point (AP) MLD node can manage its affiliated APs. Thus, an AP MLD node can modify, add, and/or subtract affiliated APs to increase capacity, manage Basic Service Sets (BSSs) interference and coverage, include switching APs to operate in channels with less interference, and/or steer associated non-AP MLD nodes to operate on better performing APs and/or AP MLD nodes.

Figure 7 illustrates an AP MLD 112, according to some embodiments. The AP MLD can operate any number of affiliated APs, e.g., APs 712a, 712b, 712c, and 712d in the illustrated example. The affiliated APs can operate on any of various frequency bands. Affiliated APs can operate on different frequency ranges (e.g., channels) of the same band or on different frequency bands.

The AP MLD can provide the affiliated APs from a single physical device (e.g., a single shared housing and potentially using the same antenna(s)). In some embodiments, the AP MLD can provide the APs from multiple distinct devices (e.g., a first device can provide one or more APs and a second device can provide one or more different APs, etc.). In some embodiments, various affiliated APs can be separated spatially (e.g., using beams in different directions, using different antennas with a shared housing (e.g., antennas of a same physical device), and/or of different devices, etc.). In some embodiments, spatially separated affiliated APs can operate on a same (or overlapping) channel(s).

Figure 8 illustrates an AP MLD 112 in communication with a non-AP MLD 106, according to some embodiments. As illustrated, the AP MLD 112 can operate three affiliated APs. For example, AP 812a can operate in a 2.4 GHz band, AP 812b can operate in a 5 GHz band, and AP 812c can operate in a 6 GHz band. Furthermore, any number of affiliated APs can be used in any combination of bands. For example, the AP MLD can operate multiple affiliated APs in one band and/or can possibly not operate any affiliated APs in a band. The affiliated APs can include various layers such as media access control (MAC) and/or physical (PHY) layers, among various possibilities. The affiliated APs can use different basic service sets (BSS) and/or different BSS identifiers (BSSID) such as BSSIDs 1-3 illustrated in Figure 8.

As illustrated, the non-AP MLD 106 can operate three affiliated STAs corresponding to the three affiliated APs. For example, STA 806a can operate in the 2.4 GHz band, STA 806b can operate in a 5 GHz band, and STA 806c can operate in a 6 GHz band. The STAs can communicate with corresponding APs (e.g., STA 806a can communicate with AP 812a, STA 806b can communicate with AP 812b, etc.). Furthermore, any number of affiliated STAs can be used in any combination of bands. For example, the non-AP MLD can operate multiple affiliated STAs in one band and/or possibly not operate any affiliated STAs in a band. The non-AP MLD can operate STAs corresponding to some, none, or all of the APs of the AP MLD. The affiliated STAs can include various layers such as PHY and/or MAC layers, among various possibilities. The affiliated STAs can use different addresses such as Addr 1-3 illustrated in Figure 8.

The non-AP MLD can provide the affiliated STAs from a single physical device (e.g., a single shared housing and potentially using the same antenna(s)). In some embodiments, the non-AP MLD can provide the STAs from multiple distinct devices (e.g., a first device can provide one or more STAs and/or a second device can provide one or more different one or more STAs, etc.). In some embodiments, various affiliated STAs can be separated spatially (e.g., using beams in different directions, using different antennas with a shared housing (e.g., antennas of a same physical device), and/or of different devices, etc.).

The various affiliated STAs and APs can communicate concurrently / simultaneously. For example, STA 806a can exchange uplink and/or downlink data with AP 812a on a first link while STA 806b exchanges uplink and/or downlink data with AP 812b on a second link, etc. Furthermore, concurrent communication can include different data being exchanged at the same time, overlapping times, and/or different times on different links. For example, data between the AP MLD and non-AP MLD can be routed over the first available link and/or a link selected based on other criteria (e.g., lowest energy use, etc.). Additionally or alternatively, a first packet or portion of data can be sent over a first link and concurrently a second packet or portion of data can be sent over a second link.

In some embodiments, the AP MLD and non-AP MLD can include respective multi-link (ML) entities. An ML entity can provide upper MAC functionality that controls the separate APs and/or STAs and can additionally or alternatively control traffic delivery through available links (e.g., between the various APs and STAs). Furthermore, the respective MLDs (e.g., AP and non-AP) can have only one respective MAC service access point (SAP) interface and the ML entity can manage this SAP interface. Additionally, the ML entity can also manage transmission buffering (e.g., bookkeeping and link selection in the transmitter) and data re-order buffering in reception (e.g., combination of the data that is transmitted in different links).

According to some embodiments, the AP MLD 112 and non-AP MLD 106 can exchange information about their respective operations, operating parameters, and/or capabilities. For example, the non-AP MLD and AP MLD can have various capabilities for operating a STA in a particular band. The capabilities can be different for different bands. For example, the capabilities in a band can be associated with one or more maximum (e.g., fastest, most flexible, most powerful, highest throughput, etc.) parameter values that a STA of the non-AP MLD can use. Additionally or alternatively, the AP-MLD and/or non-AP MLD can support integrity protection capabilities. Operations or operating parameters can describe the parameter values (e.g., associated with integrity protection capabilities, as one example) that are currently in use or can be planned to be in use at a future time.

For example, the parameters (e.g., parameter values) can include an applicable physical (PHY) version and its associated parameters. The parameters can describe supported services and transmission formats that are available. Additionally or alternatively, the parameters can describe available resources, bandwidths and number of spatial streams. In some embodiments, the parameters can apply integrity protection to various fields and subfields such that frames transmitted between a STA and AP (or non-AP MLD and an AP MLD) benefit from integrity protection. For example, it can be beneficial for client privacy enhanced (CPE) stations (STAs) or clients (as well as APs) to change or adjust certain parameters used for performing communications with an AP or STA.

According to some embodiments, the links can be located so closely (e.g., spatially and/or in frequency) that the non-AP STA can possibly not operate them independently (e.g., due to limits of the device and/or to manage resources or performance). Additionally, some APs can support STAs (e.g., non-AP MLDs) that are not capable of simultaneously transmitting and receiving on the link pair, according to some embodiments.

In some embodiments, the non-AP MLD can operate STAs communicating with multiple AP-MLDs. For example, a first STA can communicate with a first AP MLD and a second STA can communicate with a second AP MLD. Similarly, an AP MLD can communicate with multiple STAs. For example, one affiliated AP can communicate with multiple STAs.

In the illustrated example, the non-AP MLD operates a number of STAs equal to the number of APs provided by the AP MLD. However, different numbers are possible. For example, the AP MLD can provide more APs than the number of STAs operated by the non-AP MLD or vice versa. The number of APs and/or number of STAs can change over time.

By changing or adjusting certain parameters used for performing communications with an AP and/or STA, it can be more difficult for eavesdroppers (e.g., cybercriminals, hackers, etc.) to intercept, extract or listen in on communications between STAs and APs (as one example of various other device to device communications). Accordingly, clients can seek to perform more secure communications between the STAs and APs using various techniques involving integrity protection or related parameter adjustments. For example, it can be beneficial for a client (e.g., STA) and AP to change the transmitted frame number (FN), frame control field, QoS control field, or other various parameters to new values on downlink and uplink without any loss of connection, according to some embodiments. Some or all of these described changes can be useful in providing increased privacy of communications between CPE STAs and APs through making eavesdropping by unwanted persons more difficult.

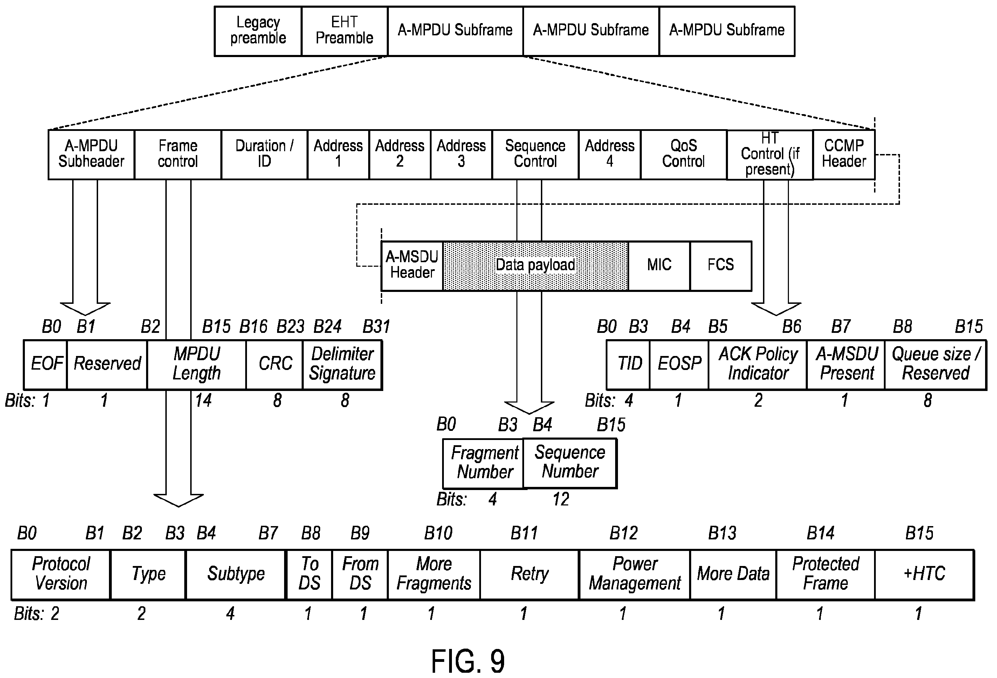

### Figure 9 - Physical Layer Protocol Data Unit (PPDU)

Figure 9 illustrates an example structure of a physical layer protocol data unit (PPDU), according to some embodiments. More specifically, Figure 9 illustrates the aggregated MAC PDU (A-MPDU) subframe parameter fields as well as subfields and associated bit values.

For example, Figure 9 illustrates an example PPDU which includes a legacy preamble, an extremely high throughput (EHT) preamble, and multiple A-MPDU subframes, according to some embodiments. In other words, the PPDU is started with PHY Preamble and a data frame has one or more A-MPDU subframes in the payload.

Additionally, Figure 9 illustrates the field structure of one of the A-MPDUs in the PPDU. For example, Figure 9 illustrates an A-MPDU which includes fields such as A-MPDU Subheader, Frame Control, Duration / Identifier (ID), Addresses 1-4, Sequence Control, Quality of Service (QoS) Control, High Throughput (HT) Control (if applicable and/or present), Counter Mode with Cipher Block Chaining Message Authentication Code Protocol (CCMP) header, Aggregated MAC Service Data Unit (A-MSDU) header, Data Payload, Message Integrity Check (MIC), and Frame Checksum (FCS), according to some embodiments. Furthermore, Figure 9 illustrates the subfield parameters of the A-MPDU, Frame Control, Sequence Control, and HT Control fields including bit assignments associated with said subfield parameters, according to some embodiments. In A-MPDU subframes, traffic identifier (TID), Sequence Number (SN) and Packet Number (PN) values can change while other header fields can have common or unchanged values, according to some embodiments.

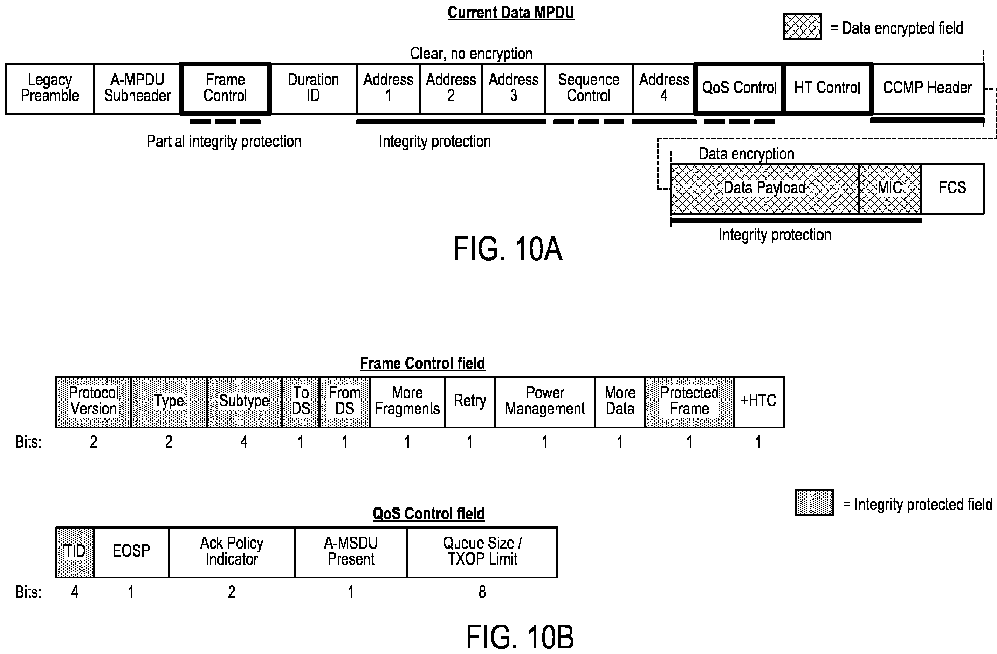

### Figures 10A-B - MAC Header Fields with Integrity Protection

Figures 10A-B illustrates an example structure of a data medium access control (MAC) protocol data unit (MPDU), example control fields, and associated integrity protection (IP) schemes, according to some embodiments. More specifically, Figure 10A illustrates various levels of integrity protection across an MPDU and additionally portions of the MPDU which are not encrypted (e.g., clear) or are encrypted. Moreover, while Frame Control, QoS Control, and Sequence Control fields can be characterized by partial integrity protection, Addresses 1-4, CCMP Header, Data Payload, and MIC fields of the MPDU can have full integrity protection, according to some embodiments.

Figure 10B illustrates the subfields of the Frame Control and QoS Control fields of the MPDU of Figure 10A as well as subfields which are integrity protected. More specifically, Figure 10B illustrates that in a Frame Control field, Protocol Version, Type, Subtype, To DS, From DS, and Protected Frame subfields can be integrity protected while others can possibly not be integrity protected, according to some embodiments. Similarly, for a QoS Control field, the TID subfield can be integrity protected while EOSP, ACK Policy Indicator, A-MSDU Present, and Queue Size / TXOP Limit subfields can possibly not be integrity protected, according to some embodiments.

In some embodiments, some MAC Header fields such as Power Management (PM) and HT Control can possibly not be integrity protected. Accordingly, security attacks with QoS Null frames can be relatively simple for skilled eavesdroppers to perform since the QoS Null frame has no integrity, replay or encryption protection. In other words, a lack of integrity protection can enable simple security attacks by eavesdroppers. For example, an attacker or eavesdropper can use the PM field to bypass AP encryption which results in a clear or poorly protected frame leak. Accordingly, these attacks can be avoided if the PM field is integrity protected.

Additionally, a STA can send an operating mode indication (OMI) HT Control field value to control its support for a number of spatial streams (NSS), a bandwidth (BW), and/or whether or not the STA supports uplink (UL) multi-user (MU) transmissions (e.g., whether or not the AP can trigger the station). However, in some instances, an attacker can use an OMI field control value to cause a transmission in a format that the victim STA is not capable of receiving. For example, an attacker can use an OMI field to indicate to the AP that the STA is capable of receiving a BW or NSS that is actually larger than the STA is capable of receiving. Additionally or alternatively, an attacker or eavesdropper can use an OMI field value to enable a very inefficient transmission mode (e.g., 20 MHz, 1 synchronization signal (SS) at 6 GHz). Accordingly, these attacks can result in delays and decreased communication efficiency between APs and STAs and therefore preventative techniques involving integrity protection can be beneficial in mitigating these attack occurrences.

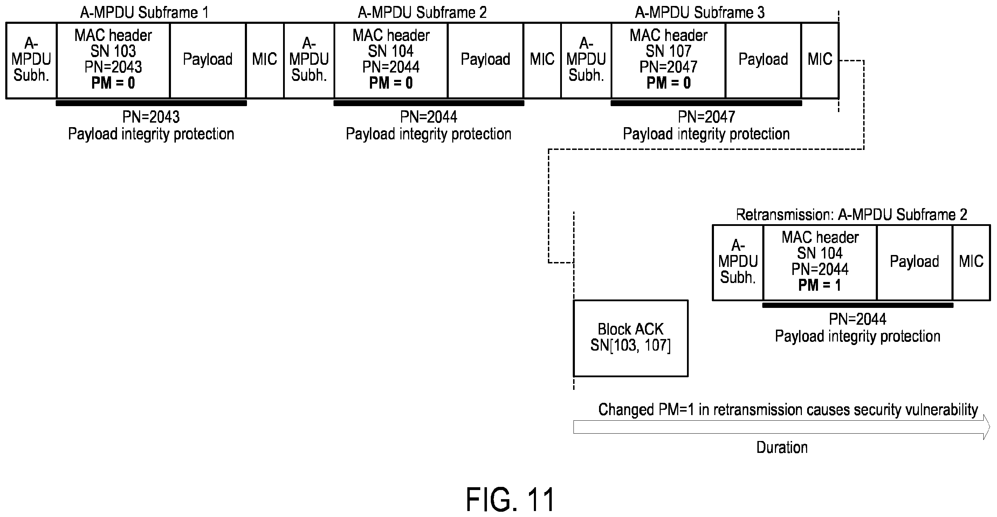

### Figure 11 - Integrity Protection Per PPDU

Figure 11 illustrates example aspects of integrity protection per PPDU, according to some embodiments. More specifically, Figure 11 illustrates multiple A-MPDU subframes (e.g., A-MPDU subframes 1-3) followed by a block acknowledgement (ACK) of sequence numbers (SN) 103 and 107. In some embodiments, the A-MPDU subframes can include MAC headers further including Sequence Numbers (SNs) and Packet Numbers (PN) which can be part of a Counter Mode with Cipher Block Chaining Message Authentication Code Protocol (CCMP) Header. Accordingly, since a block ACK was not received for SN 104, a retransmission of A-MPDU subframe 2 can occur.

Additionally, while the PM field equals 0 for A-MPDU subframes 1-3, the PM field for retransmission A-MPDU subframe 2 equals 1. This change from PM=0 to PM=1 can cause a security vulnerability because WLAN data payload integrity protection can possibly not protect MAC Header fields for which values can change in retransmissions. More specifically, this change from PM=0 to PM=1 can cause the STA to unintentionally enter a power save mode in which it can possibly not be able to receive transmissions of frames. In other words, an attacker can utilize this change in PM value to instruct the STA to turn off. Alternatively, an attacker can inform the AP (e.g., via a QoS null frame) that the STA is in power conservation mode (e.g., PM=1) when in fact the STA is not in said mode and is actually available to receive transmissions of frames. In turn, these scenarios can cause delays in communications between APs and STAs.

In some embodiments, the payload integrity protection can be performed one time for each MPDU payload and selected MAC header fields. Furthermore, protected MAC header field values can possibly not change in retransmissions as payload integrity protection uses a MPDU specific Packet Number (PN). Additionally, the More Data field or HT Control field values can change per transmitted PPDU, so they can possibly not be able to utilize payload integrity protection. However, per PPDU integrity protection of the More Data or HT Control field can be possible using separate PPDU specific Frame Number (FN) and keys, according to some embodiments.

### Enhanced Integrity Protection Techniques for Wireless Communication Systems

As eavesdroppers, attackers, and/or hackers have become increasingly aware of potential security vulnerabilities such as those discussed above, enhanced integrity protection of MAC headers and QoS null frames (as some examples) above can offer more robust protection and mitigation of successful attacks.

One potential technique for implementing integrity protection of MAC headers and QoS null frames can include the AP requesting information from a STA regarding the STA's integrity protection capabilities. Accordingly, the AP MLD can, in response to the STA supporting one or more integrity protection capabilities, adjust parameters fields of downlink frames (e.g., MAC PDUs (MPDUs) as one example) to be transmitted to the STA.

According to some embodiments, the AP can adjust parameter fields of the MPDU to allow for one or more subfields to benefit from integrity protection. For example, integrity protection of messages or frames between APs and STAs (including MLDs or non-MLDs) can involve verifying the integrity of said messages or frames. More specifically, message integrity (e.g., integrity protected messages) can allow for the receiving STA or AP or verify whether or not the messages/frames have been correctly received (e.g., from an expected/intended AP/STA). According to some embodiments, this verification can involve performing an integrity checksum of one or more parameter fields of the messages/frames. Additionally or alternatively, the checksum can be compared to a previously received value to ensure the frames are being received by the correct receiver (e.g., a STA) and/or being transmitted by the correct transmitter (e.g., an AP).

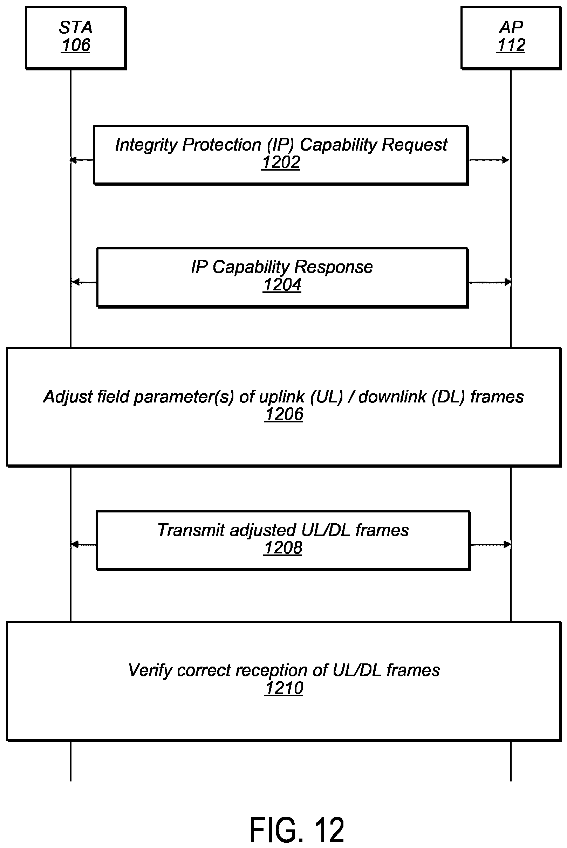

### Figure 12 - Example Method of Integrity Protection

Figure 12 is a communication flow diagram illustrating an example method of integrity protection by STAs and APs, according to some embodiments. More specifically, Figure 12 illustrates an embodiment directed toward systems, methods, and mechanisms for adjusting parameter fields of frames to allow for a STA to verify that the frames have been correctly received and from the correct transmitter. Such techniques can aid in providing improved security in wireless communications between MLD and non-MLD STAs and APs.

Aspects of the method of Figure 12 can be implemented by a non-AP (STA) in communication with an AP. Additionally or alternatively, the STA and AP can be MLDs. The AP and/or non-AP can be as illustrated in and described with respect to various ones of the Figures herein, or more generally in conjunction with any of the computer circuitry, systems, devices, elements, or components shown in the above Figures, among others, as desired. For example, a processor (and/or other hardware) of such a device can be configured to cause the device to perform any combination of the illustrated method elements and/or other method elements. For example, one or more processors (or processing elements) (e.g., processor(s) 101, 204, 302, 402, 432, 434, 439, baseband processor(s), processor(s) associated with communication circuitry such as 130, 230, 232, 329, 330, 430, etc., among various possibilities) can cause a wireless device, STA, UE, non-AP, and/or AP, or other device to perform such method elements.

Note that while at least some elements of the method of Figure 12 are described in a manner relating to the use of communication techniques and/or features associated with IEEE and/or 802.11 (e.g., 802.11bn) specification documents, such description is not intended to be limiting to the disclosure, and aspects of the method of Figure 12 can be used in any suitable wireless communication system, as desired. Similarly, while elements of the method of Figure 12 are described in a manner relating to STAs and APs that are not MLDs, such description is not intended to be limiting to the disclosure, and aspects of the method of Figure 12 can be used by STAs and/or APs that are MLDs, as desired.

The methods shown can be used in conjunction with any of the systems, methods, or devices shown in the Figures, among other devices. In various embodiments, some of the method elements shown can be performed concurrently, in a different order than shown, or can be omitted. Additional method elements can also be performed as desired. As shown, this method can operate as follows.

In 1202, a STA 106 can receive, from an access point (AP) 112, an integrity protection (IP) capability request, according to some embodiments. For example, before making any IP related decisions or performing IP related actions, the AP 112 can first determine whether or not the STA 106 supports one or more IP capabilities. In other words, the AP 112 can first verify that the STA 106 supports an IP capability before applying IP techniques related to said IP capability. As an alternative embodiment, the STA 106 can transmit an IP capability request to the AP 112.

In 1204, the STA 106 can transmit an IP capability response to the AP 112, according to some embodiments. For example, in response to the IP capability request from the AP 112, the STA 106 can transmit a response including an indication of whether or not it supports one or more IP capabilities. As an alternative embodiment, the STA 106 can receive an IP capability response to the AP 112.

In 1206, the AP 112 can adjust one or more parameter fields of downlink (DL) frames to be sent to the STA 106, according to some embodiments. In some embodiments, the AP 112can adjust one or more parameter fields of the DL frames to a value of zero. For example, the AP 112 can adjust the frame control and/or QoS control fields to be values of zero. Alternatively, the AP 112 can adjust one or more parameter fields of the DL frames to increase by a value of one. For example, the AP 112 can adjust a frame number field value to increase by one for each subsequent transmission of DL frames. As an alternative embodiment, the STA 106 can adjust one or more parameter fields of uplink (UL) frames to be sent to the AP 112.

In 1208, the STA 106 can receive the adjusted DL frames from the AP 112, according to some embodiments. In some embodiments, the one or more DL frames can include a header message integrity check (MIC) field and frame number field. Additionally or alternatively, the header MIC field can allow the STA 106 to perform an integrity checksum procedure to verify the transmitting AP 112. According to some embodiments, the one or more DL frames can be at least one of, a trigger frame, or a block acknowledgement (BA) frame. As an alternative embodiment, the STA 106 can transmit the adjusted UL frames to the AP 112.

In some embodiments, if the one or more DL frames are transmitted to a group address, the STA 106 can receive, from the AP 112, a headers MIC value associated with a group key and verify, in order to confirm that the one or more DL frames have been correctly received, that the header MIC value associated with the group key matches a value of the headers MIC field.

According to further embodiments, the plurality of parameter fields can include at least one address and the STA 106 can determine, based on a comparison of the at least one address to an address of the STA 106, whether or not the STA 106 is an intended recipient of the one or more DL frames or whether or not the AP 112 is a correct (e.g., expected) transmitter of the one or more DL frames.

In some embodiments, the one or more DL frames can be quality of service (QoS) null frames. Additionally or alternatively, the QoS null frames can include a protected medium access control (MAC) header field and a high throughput (HT) control field.

In some instances, the one or more DL frames can be beacons transmitted during one or more beacon periods. Furthermore the beacons can include one or more beacon integrity protection number (BIPNs) in which values of the one or more BIPNs are respectively increased by a value of one for beacons transmitted in respective beacon periods subsequent to a first beacon period. In other words, the BIPN can be increased by a value of one in each subsequent beacon period.

In some embodiments, the one or more BIPNs and one or more respective frame numbers (FNs) can be included as part of one or more respective physical packet data unit (PPDUs). For example, the one or more BIPNs can be six octets in length and the one or more respective FNs can be either one, two, or three octets in length. Accordingly, the PPDUs can be lengths of seven, eight, or nine octets, according to some embodiments.

At 1210, the STA 106 can verify, based on a value of the at least one of the adjusted parameter field or one or more parameter fields of the plurality of parameter fields, that the one or more DL frames have been correctly received from the AP 112. For example, if the one or more DL frames can include a header MIC field, this can allow the STA 106 to perform an integrity checksum procedure to verify that the transmitting AP 112 is the expected AP. As an alternative embodiment, the AP 112 can verify, based on a value of the at least one of the adjusted parameter field or one or more parameter fields of the plurality of parameter fields, that the one or more UL frames have been correctly received from the STA 106. For example, the AP can utilize the PM field as well as its value (e.g., PM=1 or PM=0) to determine whether or not one or more UL frames are received from the correct STA, according to some embodiments.

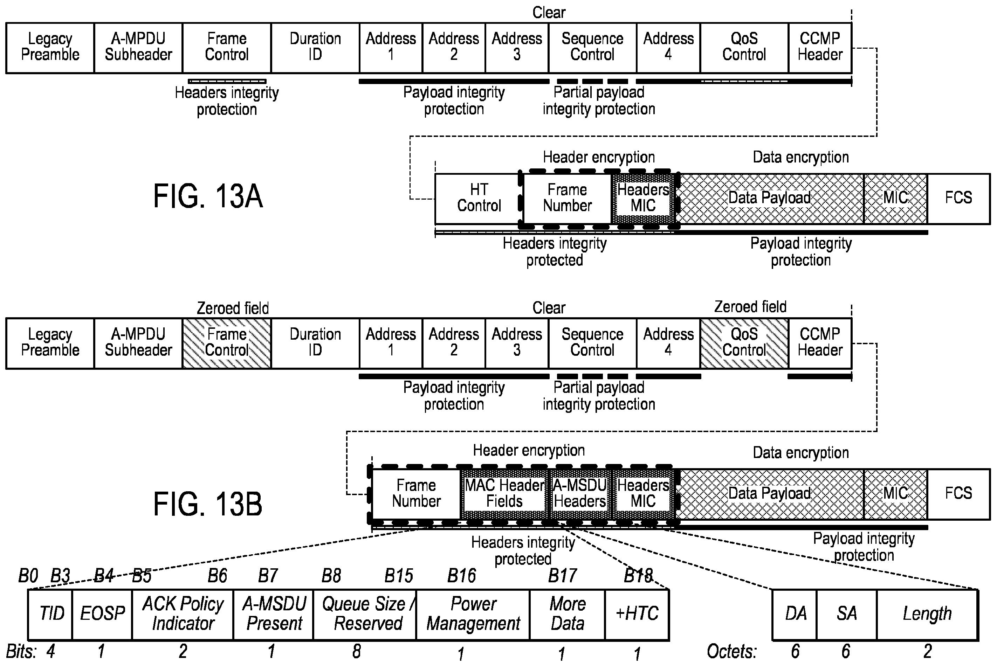

### Figures 13A-C - MAC Header Integrity Protection

Figures 13A-C illustrate example aspects of integrity protection techniques for MPDUs, according to some embodiments. More specifically, Figure 13A illustrates a selective integrity protection technique for MAC headers of an MPDU. For example, Figure 13A illustrates multiple levels of integrity protection used across the MPDU including payload integrity protection (e.g., solid bold line below fields in Figures 13A-B), partial payload integrity protection (e.g., dashed bold line below field(s) in Figures 13A-B), and headers integrity protection (e.g., segmented line below field(s) in Figures 13A-B), according to some embodiments. More specifically, the frame control, QoS control, HT control, frame number and headers MIC fields can be characterized as having headers integrity protection, Address 1-4 fields, CCMP header, data payload, and MIC fields can be characterized as having payload integrity protection, and the sequence control field can be characterized as having partial payload integrity protection. Furthermore, Figures 13A-C illustrate fields which have header encryption (e.g., dashed bold border), according to some embodiments.

According to some embodiments, the MPDU payload can be encrypted only one time and the payload encryption can be kept the same while the payload is being transmitted. Furthermore, the payload encryption can include Address fields, Packet Number and Sequence Number as input parameters and further provide integrity protection for these MAC Header fields. The values of these fields can be kept the same for the encrypted payload transmission and retransmissions. Additionally, the payload can have a separate MIC field for the integrity protection, according to some embodiments.

In some embodiments, MAC Header field values can change per each transmitted MPDU and these fields can typically signal the state of the transmitter. For example, the fields can signal the transmitter power management mode. In other words, the fields can signal whether the device is in an active mode or in a power save mode. However, the transmitter can change these values per transmitted MPDU, according to some embodiments.

According to further embodiments, the per MPDU MAC Header integrity protection mechanism can integrity protect all MAC Header fields or only a partial set of the MAC Header fields. For example, the partial set of MAC Header fields protection can protect only the fields that are not protected by the data frame integrity protection. Accordingly, this can enable security attacks against the STA. Therefore, protecting all MAC Header fields can be beneficial and the receiver can verify the MAC Header integrity before starting to decrypt the MPDU payload, according to some embodiments.

According to some embodiments, a PPDU can be considered as a whole transmission which can include a preamble and one or more MPDUs. Additionally, the MPDU can contain the MAC Header and payload. Furthermore, some MAC Header fields can have the same values in the MPDUs of the PPDU. Alternatively, some MAC Header fields can have distinct values for MPDUs of the PPDU, according to some embodiments.

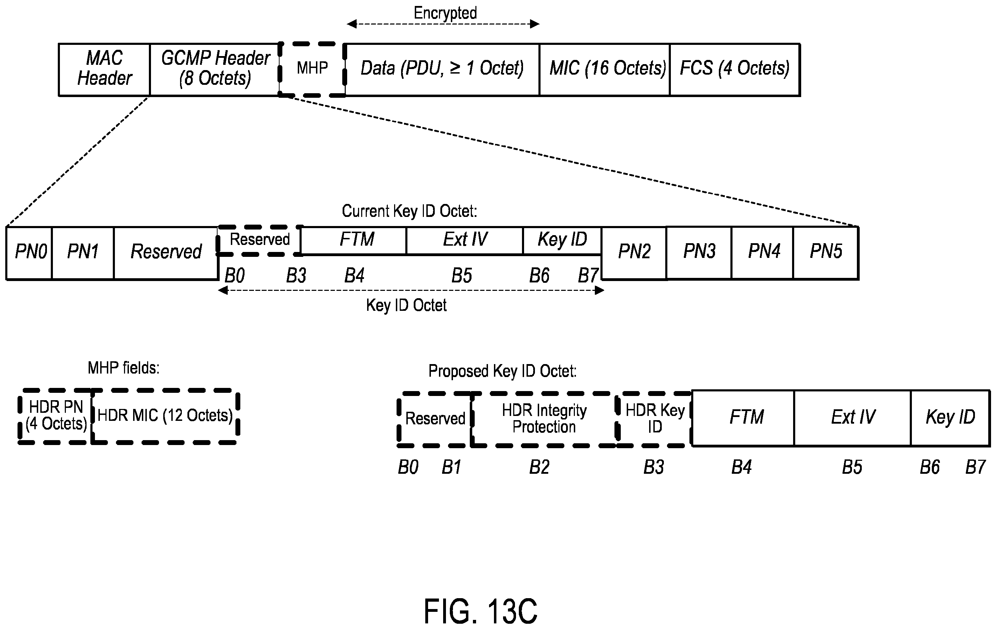

In some embodiments and related to Figure 13C, the MAC Header integrity protection can be signaled in the MAC Header. This signaling can allow receivers to detect the structure of the MAC Header and allocate the payload correctly to different MAC Header fields and to the payload, according to some embodiments. Furthermore, the MAC Header integrity protection can be signaled by using the second bit (e.g., bit 2) of the fourth octet of the CCMP or Galois/Counter Mode Protection (GCMP) Headers (e.g., as illustrated in Figure 13C). As this bit is reserved, additional fields are not needed in the MAC Header in order to signal the MAC Header integrity protection. According to some embodiments, GCMP can be characterized as an encryption protocol used in wireless security that provides both data privacy (encryption) and authentication to ensure the integrity and authenticity of data.

In some embodiments, the MAC Header integrity protection may have a key (e.g., key ID) change. In a key change process, the transmitter and receiver can setup a new key via key renewal signaling, according to some embodiments. Furthermore, for the key renewal process, it can be necessary for the MAC Header to identify the key that is used to integrity protect the current MAC Header. For example, a high data rate (HDR) Key ID bit can be used to signal the key that is used to integrity protect the MAC Headers in transmission(s), according to some embodiments. In some embodiments, a HDR Key ID value of 0 (e.g., zero) can be assigned to a specific integrity protection key in an association procedure and a value of 1 can be assigned to the integrity protection key setup in key renewal negotiation procedures. Furthermore and as illustrated in Figure 13C, the HDR Key ID bit can be the third bit (e.g., B3 (bit 3)) of the fourth octets of the CCMP or GCMP Headers, according to some embodiments. As this bit is reserved, additional fields are not needed in the MAC Header in order to signal the MAC Header integrity protection. According to some embodiments and as illustrated in Figure 13C, a modulated hermite pulse (MHP) field can include a 4 octet length HDR PN field and a 12 octet length HDR MIC field. In some instances, MHPs can be utilized for narrowband interference mitigation in high data rate ultra-wideband (UWB) body area networks (BANs).

In some embodiments, the frame number field and headers MIC field can be added to the MPDU and can further have header encryption (e.g., as shown by the extra bold dashed line around the frame number and header MIC fields in Figure 13A and additionally the MAC header fields and A-MSDU fields in Figure 13B) and the data payload and MIC fields can have data encryption (e.g., as shown by the dot-filled data payload and MIC fields in Figures 13A-B), according to some embodiments. The header MIC field length may be 64 or 96 bits. Additionally, the remaining fields (except for the legacy preamble and FCS field) can possibly not be encrypted and therefore can be considered as "clear", according to some embodiments. As one alternative, it can be possible to apply headers integrity protection across all of the clear fields (except the FCS and legacy preamble fields) and header encrypted fields, according to some embodiments. In other words, a complete (rather than selective) headers integrity protection scheme or technique can be applied across the clear and header encrypted fields. Moreover, as providing integrity protection of the Duration / ID field can be difficult due to potentially needing to extend the value of a duration for reception of A-MPDUs, one additional alternative can be to provide integrity protection to all fields except the Duration / ID field, according to some embodiments. However, if the Duration / ID field value was able to be determined prior to receiving the A-MPDUs, it can be possible to extend integrity protection to said Duration / ID field.

Figure 13B illustrates an alternative selective integrity protection technique for MAC headers of an MPDU. For example, Figure 13B illustrates the same multiple levels of integrity protection across the MPDU. However, in some instances, it can be beneficial to change certain fields (e.g., frame control and QoS control) of the MPDU to values of zero (e.g., as shown by the diagonal line filled fields in Figure 13B). In other words, by "zeroing" certain fields, it can be possible to exclude certain values from being received. More specifically, the real values (e.g., the values prior to being adjusted to zero), would not be known by the recipient, according to some embodiments.

According to some embodiments, including MAC header fields and A-MSDU header fields in the header encrypted portion of the MPDU can be beneficial in providing enhanced integrity protection. For example, if the Frame Control and QoS control fields were adjusted to zero (e.g., in order to not provide that information to the recipient), the previously assigned values of those fields could be included in the header encrypted MAC header fields and would therefore benefit from being integrity protected. In some embodiments, two formats of addresses can be used in the MPDU. For example, the A-MSDU header field can be added as payload to integrity protect (e.g., by being included in the header encryption) the address fields as part of one format while the address fields 1-4 remain unencrypted.

In some embodiments related to a selective protection scheme or technique, the frame number, MAC header fields, A-MSDU header, and headers MIC fields can be characterized as having headers integrity protection, Address 1-4 fields, CCMP header, data payload, and MIC fields can be characterized as having payload integrity protection, and the sequence control field can be characterized as having partial integrity protection. Additionally or alternatively, it can be possible to apply headers integrity protection across the all of the clear fields and header encrypted fields, according to some embodiments. In other words, a complete (rather than selective) headers integrity protection scheme or technique can be applied across the clear and header encrypted fields. Figure 13B also illustrates the subfields of the MAC header fields (and associated bit assignments) as well as the subfields (and corresponding number of octets) of the A-MSDU including for destination address (DA), sender address (SA), and length.

In both Figures 13A and 13B, the MPDU includes a Frame Number that is used in the header fields encryption. Additionally, the Header MIC field is added to include an integrity checksum calculation of the header fields. Additionally or alternatively, the values of the MAC Header fields can be included as encrypted payload in order to improve STA privacy, according to some embodiments.

In some embodiments, a STA can determine whether it is the correct recipient of the frame by checking whether its MAC address is the receiver address. In other words, the STA can compare its MAC address to Address 1-4 fields to confirm that its address in included. Accordingly, if its MAC address is not included in the Address fields 1-4, the STA can determine that it is not a correct recipient of the frames, according to some embodiments. Furthermore, if the STAs address was not included, it can further determine that the frames were transmitted by potential attacker / hacker and therefore the STA can terminate frame reception, according to some embodiments.

Additionally or alternatively, a STA can determine whether it is the correct recipient of the frame by checking or verifying that the frame has been transmitted to a group address and that the Headers MIC matches a calculated Headers MIC value, according to some embodiments. If the STA determines that one or both of these cases is not true, the STA can terminate frame reception. Additionally, some STAs can check the frame checksum (FCS) field to ensure that frame is correctly received. In some embodiments, the Headers MIC field uses group keys which can allow all STAs in a BSS to calculate the MIC. In these cases, if the calculated MIC matches with the received MIC, the STA can verify that it has received the MAC Headers correctly. In some embodiments, the aspects of Figures 13A-B can be utilized with the example method as shown in Figure 12. For example, at least some of the parameter fields described in Figures 13A-B can be used to verify (as in 1210) that the one or more DL frames have been received from the correct AP

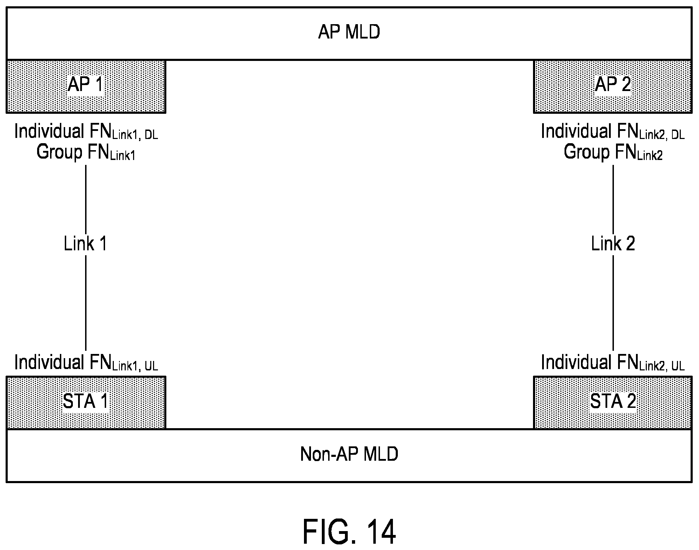

### Figure 14 - Integrity Protection for MLDs

Figure 14 illustrates example aspects of integrity protection techniques involving access point (AP) and non-AP multi-link devices (MLDs), according to some embodiments. More specifically, Figure 14 illustrates an example method of MAC headers protection for AP MLD and STA MLD communications using frame number spaces.

For example, Figure 14 illustrates an AP MLD including AP 1 which can communicate to STA 1 of Non-AP MLD via Link 1. Accordingly, for downlink (DL) communications on Link 1, there can be corresponding downlink frame numbers including Individual FN_{Link1, DL} and/or a Group FN_{Link1} (e.g., group addressed frames). Additionally, for uplink (UL) communications on Link 1, there can be a corresponding uplink frame number such as Individual FN_{Link1, UL}. Additionally, the AP MLD can include AP 2 which can communicate to STA 2 of Non-AP MLD via Link 2. Accordingly, for DL communications on Link 2, there can be corresponding downlink frame numbers including Individual FN_{Link2, DL} and/or a Group FN_{Link2}. Additionally, for UL communications on Link 2, there can be a corresponding uplink frame number such as Individual FN_{Link2, UL}.

According to some embodiments, it can be possible to avoid replay attacks and to make MAC Header fields integrity protection secure. For example, as Frame Numbers (FNs) and Sequence Numbers (SNs) can be maintained at the link level (e.g., Individual FN [STA,AP] and Group FN [AP] as shown in Figure 14), the AP MLD can combine the appropriate FNs and SNs from AP 1 and AP 2 and use a reordering buffer to appropriately receive the frames from each STA (e.g., STA 1 and STA 2).

In some embodiments, each PPDU which is integrity protected can have a new FN Accordingly, by increasing each transmitted UL/DL Protected frame (e.g., UL/DL FN) by +1, the receiver can maintain link specific replay counters. Therefore, upon each reception of a transmission, the receiver checks that UL/DL Individual frame has UL/DL FN +1 (e.g., the uplink or downlink frame number has increased from the previous value) to verify that it is receiving from the correct transmitter. In other words, MLDs can use respective counters for respective links as part of an integrity protection technique involving increasing the FN of frames received from specific links.

Alternatively, the receiver can verify that the received FN value (e.g., UL/DL FN +1) is greater than an older value. This can allow for the situation in which the AP or STA did not receive a PPDU. Additionally or alternatively, a STA can check that group frames have a larger Group FN value than previously received. Furthermore, if an AP uses group keys for integrity protection, the AP can use only one FN for all frames, according to some embodiments. In some embodiments, the aspects of Figure 14 can be utilized with the example method as shown in Figure 12. For example, by increasing the FN as described in Figure 14, this can be used for verification purposes (e.g., as in 1210). More specifically, the MLDs can maintain link specific replay counters in order to verify that the one or more DL frames have been received from the correct AP.

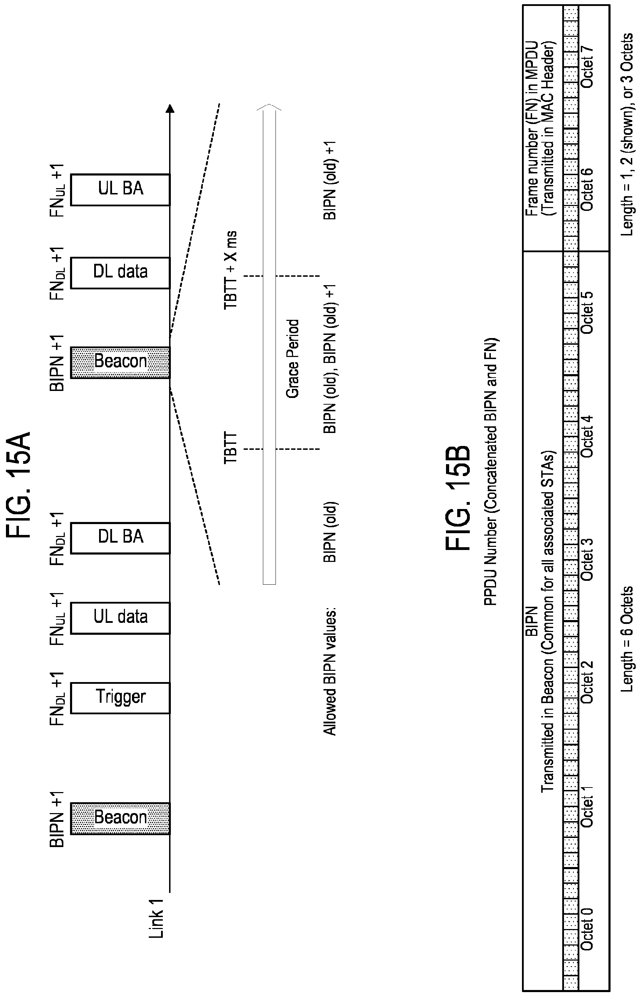

### Figures 15A-B - Integrity Protection for Beacon Signaling

Figures 15A-B illustrate example aspects of integrity protection techniques related to beacon signaling, according to some embodiments. Beacons can be sent by the AP at regular intervals for a variety of purposes including passive discovery by seeking clients, power save management, as well as communicating, updating and synchronizing BSS features, according to some embodiments.

More specifically, Figure 15A illustrates how a beacon (and subsequent trigger, data, and block acknowledgement (BA) signaling) transmitted on a link (e.g., Link 1) can benefit from integrity protection techniques. For example, increasing the beacon integrity packet number (BIPN) by +1 and additionally increasing the trigger FN_{DL}+1, the UL data FN_{DL}+1, and the DL BA FN_{DL}+1 can allow the receiver to (similar to the method of Figure 14) maintain link specific replay counters. Therefore, upon each reception of a transmission, the receiver checks that the BIPN, trigger, UL data, and DL BA FNs having been increased by one to verify that they are communicating with the correct transmitter.

Additionally, Figure 15A illustrates the allowed BIPN values in an example transmission of a beacon. Beacons can be sent by the AP at regular intervals defined as Target Beacon Transmission Times (TBTTs) which are measured in time units (TUs) equal to 1024 microseconds. The TBTT is called a target transmission time because it does not always occur at exactly 102.4 ms (corresponding to a default value of 100 TUs). For example, if a link is available at the TBTT, the beacon can be transmitted at that time. However, if the link is unavailable at the TBTT, the AP can contend for access which results in a delay.

Due to the aforementioned random nature of channel access processes and potential beacon transmission delay, the transmitter can additionally have a delay in the TBTT value increase, according to some embodiments. For example, before a TBTT, the beacon transmitted on Link 1 can be associated with a BIPN with an old value (e.g., BIPN (old). During a grace period extending from TBTT to TBTT+ X ms, the beacon transmitted on Link 1 can be associated with either BIPN (old) or BIPN (old) +1, according to some embodiments. However, after TBTT+ X ms marking the end of the grace period, the beacon should be associated with BIPN (old) +1 rather than BIPN (old). In other words, the receiver receives frames that use the old TBTT value for a grace period to ensure simple transmitter implementations. In some embodiments, the duration of the grace period can be defined in the specification or it can be negotiated in association.

Figure 15B illustrates a PPDU number which includes a concatenated BIPN and FN. More specifically, the BIPN can have a fixed length of six octets, is transmitted in the beacon, and can further be common for all associated STAs, according to some embodiments. Additionally, the frame number (FN) can be transmitted in the MAC header of the PPDU. In some embodiments, payload integrity protection can have a 6 octets long packet number (PN). Accordingly, one option for providing integrity protection in beacon signaling would be to have a unique eight octets long PPDU Number and shorten a MAC Header overhead to 2 octets. Accordingly, the BIPN is increased by +1 in every beacon period and the FN is increased by +1 for each transmitted PPDU with PPDU integrity protection. Therefore, the PPDU Number should not have the same value in any PPDU integrity protected frame.

While Figure 15B illustrates the scenario in which the length of the FN is two octets, the length of the FN can be 1,2, or 3 octets. For example, a two octet FN can allow for a maximum of 65536 PPDU transmissions per beacon period which corresponds to one PPDU per 1.535 µs in a default beacon interval (e.g., ~100 ms), according to some embodiments. Additionally or alternatively, a one octet FN can allow for a maximum of 256 PPDU transmissions per beacon period which corresponds to one PPDU per 390 µs in a default ~100ms beacon interval. Furthermore, a three octet FN can allow for a maximum of 16,777,215 PPDU transmissions per beacon period which corresponds to one PPDU per 5.9 ns in a default ~100ms beacon interval. In some embodiments, the aspects of Figures 15A-B can be utilized with the example method as shown in Figure 12. For example, by increasing the BIPN and FN as described in Figures 15A-B, this can be used for verification purposes (e.g., as in 1210). More specifically, the STA can maintain counters in order to verify that the one or more DL frames have been received from the correct AP.

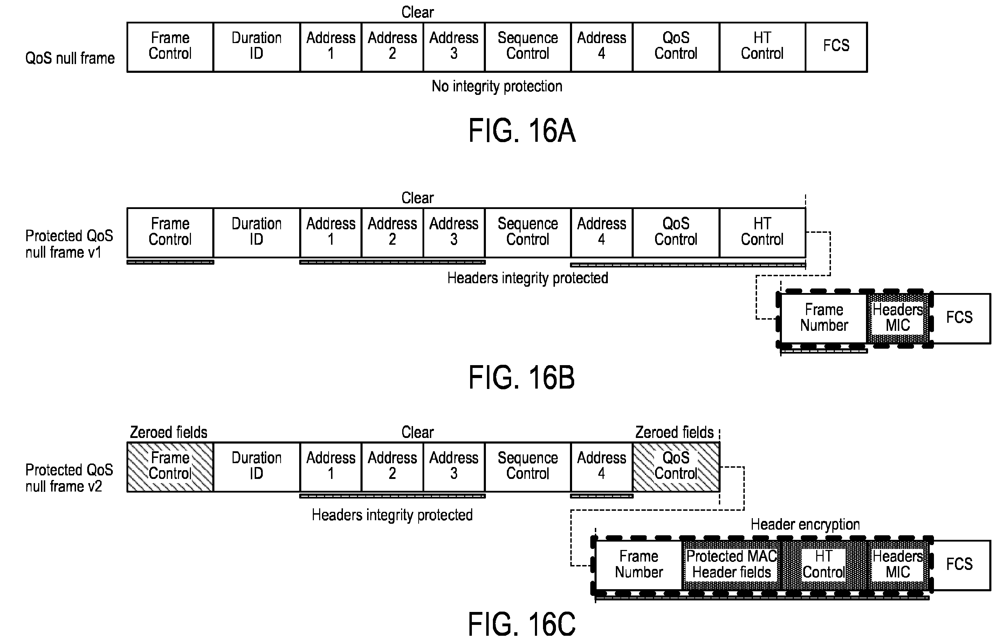

### Figures 16A-C - Protected QoS Null Frame

Figures 16A-C illustrate example aspects of integrity protection techniques associated with quality of service (QoS) null frames, according to some embodiments. More specifically, Figure 16A illustrates a QoS Null frame without encryption (e.g., clear) and without integrity protection. A QoS Null frame can be characterized as a data frame which is transmitted over the air (OTA) without a payload, integrity protection, encryption, and/or packet number. However, the SN of the QoS null frame can be set to any value. In some instances, attackers (e.g., hackers or eavesdroppers) can use QoS null frames to carry PM or OMI values in attempts to intercept or manipulate communications between devices. Accordingly, it can be beneficial to provide integrity protection for QoS Null frames.

Figure 16B illustrates a first option or version (e.g., "v1") of a protected QoS Null frame which provides header integrity protection to the frame control, Address 1-4, Sequence Control, QoS control, HT control and frame number fields, according to some embodiments. Furthermore, this first version also incorporates header encryption for the frame number and header MIC fields.

Figure 16C illustrates a second option or version (e.g., "v2") of a protected QoS Null frame which adjusts the values of the frame control and QoS control fields to values of zero, provides header integrity protection to the Address 1-4, frame number, protected MAC header fields, HT control, and Header MIC fields, according to some embodiments. Furthermore, this second version also incorporates header encryption for the frame number, protected MAC header fields, HT control, and Header MIC fields.

In some embodiments, the aspects of Figures 16A-C can be utilized with the example method as shown in Figure 12. For example, by adjusting the frame control and QoS control fields to values of zero (e.g., from the previously assigned values) as described in Figures 16C, the real (e.g., unadjusted) values of frame control and QoS control field values can be included in the protected MAC header fields and further be used for verification purposes (e.g., as in 1210). More specifically, the STA can perform a checksum procedure in order to verify that the one or more DL frames have been received from the correct AP.

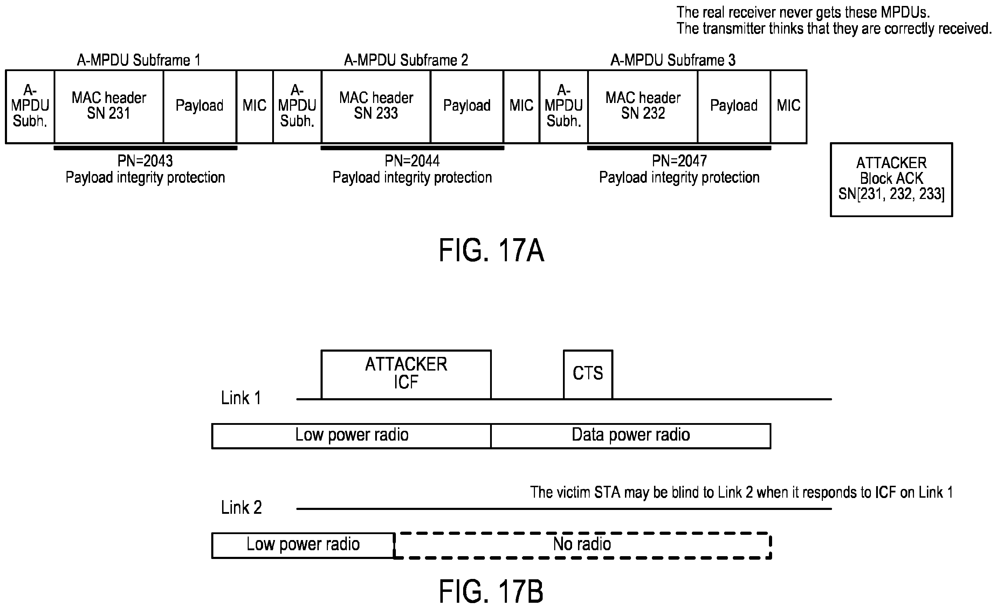

### Figures 17A-B - Integrity Protection for Control Frames

Figures 17A-B illustrate example aspects of integrity protection techniques associated with control frames, according to some embodiments. More specifically, Figure 17A illustrates multiple A-MPDU subframes (e.g., A-MPDU subframes 1-3) followed by a block acknowledgement from an attacker (e.g., eavesdropper/hacker) of sequence numbers 231, 232, and 233. Accordingly, while the real receiver never received these MPDUs, the transmitter can incorrectly, based on receiving the block ACK, determine that they were successfully received at the correct address. In other words, the attacker can use Block ACKs to signal to the transmitter that all frames have been received which can cause the transmitter to incorrectly consider the frames received by the real receiver / victim STA. Alternatively, the attacker can use Block ACKs to signal to the transmitter that no frames have been received. This can in turn cause the transmitter to retransmit frames again.

Figure 17B illustrates how a victim STA can be unaware (e.g., "blind") to Link 2 when it responds to an initial control frame (ICF) on Link 1. For example, an attacker can send an enhanced multi-link single radio (EMLSR) with an ICF to the victim STA. Accordingly, when the victim STA receives the ICF, it powers up the data radio and "locks-in" or connects to the link in which the frame is transmitted. Therefore, the triggered STA can possibly not be aware of what happens in the other channel (e.g., Link 2) when it is locked to a different channel (e.g., Link 1) and STA power consumption can increase when it needs to power up its data radio.

Accordingly, it can be beneficial to incorporate integrity protection of the ICF in order to mitigate attacks using said ICF. In some embodiments, the aspects of Figures 17A-B can be utilized with the example method as shown in Figure 12. For example, by adjusting field values of the ICF and/or including parameter field values of ICF in protected (e.g., encrypted) MAC header fields, this can allow the STA to verify or determine whether or not the ICF is from a legitimate source. Additionally, this can enable the STA to prevent unnecessary power consumption increases from powering up its data radio for illegitimate sources.

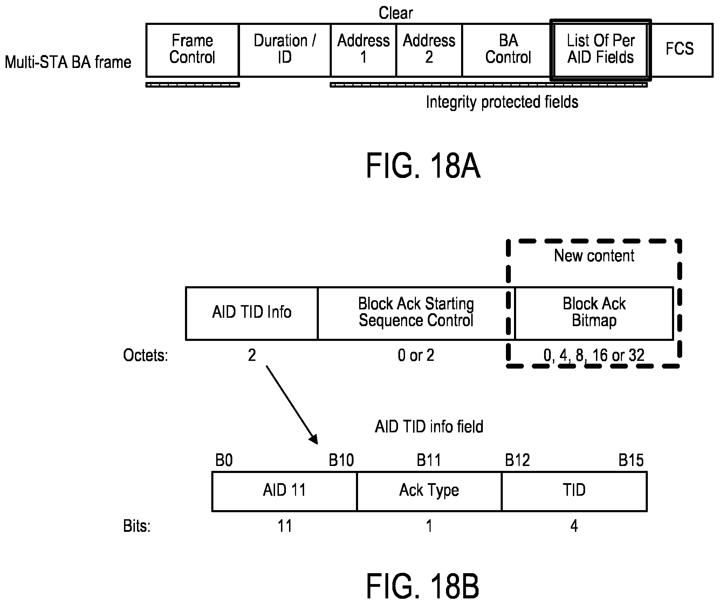

### Figures 18A-B - Integrity Protection for Multi-STA Block Ack

Figures 18A-B illustrate example aspects of integrity protection techniques for multi-station (multi-STA) block acknowledgement (BA) frames, according to some embodiments. More specifically, Figure 18A illustrates an example of a multi-STA BA frame, its corresponding fields, as well as which of these fields can be provided integrity protection. For example, the frame control, address 1-2, BA control, and list of per AID fields can be integrity protected while the duration / ID and FCS fields can possibly not be integrity protected, according to some embodiments. Additionally, the fields of the multi-STA BA frame can be considered "clear" or not encrypted.

Furthermore, because a Multi-STA BA can contain Block Ack information to multiple STAs and the BA Information contains multiple Per AID TID Information, no changes to the Multi-STA Block Ack frame format can be necessary to provide integrity protection. For example, Group addressed BA will use Group integrity protection keys and frame number, according to some embodiments.

Figure 18B illustrates an example Per AID field of the multi-STA BA frame as well as the associated number of octets for each field. More specifically, Figure 18B illustrates a two octet length association identifier (AID) transaction identifier (TID) info field, a block acknowledgement (Ack) starting sequence control field which can be either zero or two octets in length, and a newly added Block Ack Bitmap field which can be zero, four, eight, sixteen, or thirty-two octets in length. Additionally, Figure 18B illustrates an example AID TID Info field and its associated subfields and bit assignments. For example, the AID 11 field can be defined by eleven bits from B0 to B11 (e.g., with a possible 2048 possible values), according to some embodiments.

In some embodiments, the AID11 field value can be associated with or correspond to content of the Block Ack Bitmap field. For example, an AID11 field value of 2044 (TBC) can correspond to a Block Ack Bitmap field content of a frame number (24 bits) and X reserved bits and an AID11 field value of 2045 (TBC) can correspond to a Block Ack Bitmap field content of a headers MIC value, according to some embodiments. Furthermore, the AID11 field value (e.g., a new dedicated AID or STA-IDs) of 2044 (TBC) can correspond to a BA content size of four octets and a BA bitmap content of a 16 bit frame number and 12 reserved bits. Alternatively, the AID11 field value of 2045 (TBC) can correspond to a BA content size of sixteen or thirty-two octets and a BA bitmap content of the headers MIC value, according to some embodiments.

Additionally or alternatively, an AID11 field value of 20 can correspond to a BA Bitmap of TID 1 for STA 1, an AID11 field value of 21 can correspond to a BA Bitmap of TID 2 for STA 1, an AID11 field value of 22 can correspond to a BA Bitmap of TID 0 for STA 2, and an AID11 field value of 23 can correspond to a BA Bitmap of TID 7 for STA 1, according to some embodiments.

In some embodiments, the aspects of Figures 18A-B can be utilized with the example method as shown in Figure 12. For example, by adjusting the AID values of the BA and/or including specific block ack bitmap field values, this can allow the STA to verify or determine whether or not the BA frame is from a legitimate source.

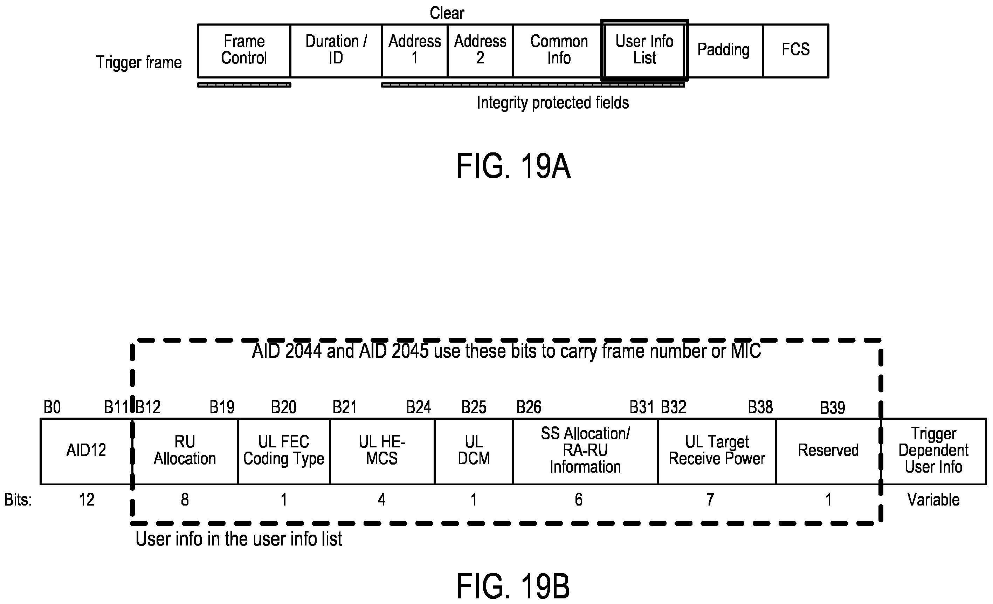

### Figures 19A-B - Integrity Protection for Trigger Frames

Figures 19A-B illustrate example aspects of integrity protection techniques associated with trigger frames, according to some embodiments. More specifically, Figure 19A illustrates an example of a trigger frame, its corresponding fields, as well as which of these fields can have integrity protection. For example, the frame control, address 1-2, Common Info, and User Info list can be integrity protected while the duration / ID, Padding, and FCS fields can possibly not be integrity protected, according to some embodiments. Additionally, the fields of the trigger frame can be considered "clear" or not encrypted.

Furthermore, as the User Info List contains the UL RU allocations and the Frame Number and MIC are carried as part of User Info list, no changes to the trigger frame format can be necessary. Accordingly, the trigger frame format can be considered to be fully legacy compatible and use the same AID values as in the BA (e.g., as in Figures 18A-B), according to some embodiments.

Figure 19B illustrates the subfields and corresponding bit assignments of the User Info List of the Trigger frame field. Additionally, Figure 19B illustrates that the subfields of the User Info List other than the AID12 and Trigger Dependent User Info fields (e.g., as surrounded by the bolded dashed line in Figure 19B) include bits which AID 2044 and AID 2045 can use to carry a frame number or MIC, according to some embodiments. For example, the AID/STA-ID in the trigger frame can be associated with or correspond to content of the User Info field. For example, an AID/STA-ID value of 2044 (TBC) can correspond to a User Info field content of a frame number (16 bits) and 12 reserved bits, an AID/STA-ID value of 2045 (TBC) can correspond to User Info field content of a headers MIC value, according to some embodiments. Additionally or alternatively, the headers MIC value associated with an AID/STA-ID value of 2045 (TBC) can be provided in one or more fragments, according to some embodiments. For example, an AID/STA-ID value of 2045 (TBC) can be associated with Headers MIC value Fragments one of three (e.g., 1/3), two of three (e.g., 2/3), and/or three of three (e.g., 3/3), according to some embodiments.

In some embodiments, the aspects of Figures 19A-B can be utilized with the example method as shown in Figure 12. For example, by adjusting the AID values of the User Info List of the trigger frame, this can allow the STA to verify or determine whether or not the trigger frame is from a legitimate source, according to some embodiments.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Embodiments of the present disclosure can be realized in any of various forms. For example, some embodiments can be realized as a computer-implemented method, a computer-readable memory medium, or a computer system. Other embodiments can be realized using one or more custom-designed hardware devices such as ASICs. Other embodiments can be realized using one or more programmable hardware elements such as FPGAs.

In some embodiments, a non-transitory computer-readable memory medium can be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a wireless device can be configured to include a processor (and/or a set of processors) and a memory medium, where the memory medium stores program instructions, where the processor is configured to read and execute the program instructions from the memory medium, where the program instructions are executable to cause the wireless device to implement any of the various method embodiments described herein (or, any combination of the method embodiments described herein, or, any subset of any of the method embodiments described herein, or, any combination of such subsets). The device can be realized in any of various forms.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method, comprising:
by a non-access point, non-AP, station, STA (106):
receiving (1202), from an access point, AP, (112) an integrity protection, IP, capability request;
transmitting (1204), based at least in part on the non-AP STA supporting one or more IP capabilities, an IP capability response to the AP;
receiving (1208), from the AP, one or more downlink, DL, frames comprising at least one adjusted parameter field of a plurality of parameter fields, wherein the at least one adjusted parameter field is adjusted (1206) by the AP based at least in part on the non-AP STA supporting the one or more IP capabilities; and
verifying (1210), based on at least one value of the adjusted parameter field adjusted by the AP or one or more parameter fields of the plurality of parameter fields, that the one or more DL frames have been correctly received from the AP.

2. The method of claim 1, wherein the one or more DL frames comprise a Header Message Integrity Check, MIC, field and Frame Number, FN, field.

3. The method of claim 2, wherein as part of verifying that the one or more DL frames have been correctly received from the AP, the method further comprises:
performing an integrity checksum calculation using the Header MIC field.

4. The method of claim 2, wherein the one or more DL frames are associated with a group address, and wherein the method further comprises:
receiving, from the AP, a Headers MIC value associated with a group key; and
determining, as part of verifying that the one or more DL frames have been correctly received from the AP, that the Header MIC value associated with the group key matches a value of the Headers MIC field.

5. The method of claim 1, wherein the plurality of parameter fields comprises at least one address, and wherein the method further comprises:
determining, based on a comparison of the at least one address to an address of the STA, at least one of the following:
whether or not the STA is an intended recipient of the one or more DL frames; or
whether or not the AP is a correct transmitter of the one or more DL frames.

6. The method of claim 1, wherein the one or more DL frames are at least one of:
a trigger frame; or
a block acknowledgement, BA, frame.

7. The method of claim 1, wherein at least one of the plurality of parameter fields is adjusted to a value of zero.

8. The method of claim 1, wherein a value of one of the plurality of parameter fields is increased by one.

9. A method, comprising:
by an access point, AP (112):
transmitting (1202), to a non-access point, non-AP, station, STA, (106) an integrity protection. IP, capability request;
receiving (1204) an IP capability response from the non-AP STA, wherein the IP capability response indicates that the non-AP STA supports one or more IP capabilities;
adjusting (1206), based at least in part on the non-AP STA supporting the one or more IP capabilities, a value of at least one parameter field of one or more downlink, DL, frames; and
transmitting (1208), to the non-AP STA, the one or more DL frames, wherein the at least one parameter field is adjusted to provide IP to the one or more DL frames.

10. The method of claim 9, wherein the value of the at least one parameter field is adjusted to zero or increased by one.

11. The method of claim 9, wherein the one or more DL frames are beacons transmitted during one or more beacon periods.

12. The method of claim 11, wherein the beacons comprise one or more beacon integrity protection number, BIPNs, and wherein values of the one or more BIPNs are respectively increased by one for beacons transmitted subsequent to a first beacon period.

13. The method of claim 12, wherein the one or more BIPNs and one or more respective frame numbers, FNs, are comprised in one or more respective physical packet data unit, PPDUs, wherein the one or more BIPNs are six octets in length, and wherein the one or more respective FNs are one, two, or three octets in length.

14. A processor, comprising:
memory storing instructions that, when executed, cause a non-access point, non-AP, station, STA, to perform the method of any of claims 1-8.

15. A processor, comprising:
memory storing instructions that, when executed, cause an access point, AP, to perform the method of any of claims 9-13.

## Patentansprüche

1. Verfahren, umfassend: durch eine Nicht-Zugangspunkt-, Nicht-AP-, Station, STA (106): Empfangen (1202), von einem Zugangspunkt, AP, (112) einer Integritätsschutz-, IP-, Fähigkeitsanforderung; Übertragen (1204), basierend zumindest teilweise darauf, dass die Nicht-AP-STA eine oder mehrere IP-Fähigkeiten unterstützt, einer IP-Fähigkeitsantwort an den AP; Empfangen (1208), von dem AP, eines oder mehrerer Downlink-, DL-, Rahmen, die mindestens ein angepasstes Parameterfeld einer Vielzahl von Parameterfeldern umfassen, wobei das mindestens eine angepasste Parameterfeld durch den AP basierend zumindest teilweise darauf angepasst wird (1206), dass die Nicht-AP-STA die eine oder die mehreren IP-Fähigkeiten unterstützt; und Verifizieren (1210), basierend auf mindestens einem Wert des angepassten Parameterfelds, das durch den AP angepasst wird, oder einem oder mehreren Parameterfeldern der Vielzahl von Parameterfeldern, dass der eine oder die mehreren DL-Rahmen korrekt von dem AP empfangen wurden.

2. Verfahren nach Anspruch 1, wobei der eine oder die mehreren DL-Rahmen ein Header-Nachricht-Integritätsprüf-, MIC-, Feld und ein Rahmennummer-, FN-, Feld umfassen.

3. Verfahren nach Anspruch 2, wobei als Teil des Verifizierens, dass der eine oder die mehreren DL-Rahmen korrekt von dem AP empfangen wurden, das Verfahren ferner umfasst: Durchführen einer Integritätsprüfsummenberechnung unter Verwendung des Header-MIC-Felds.

4. Verfahren nach Anspruch 2, wobei der eine oder die mehreren DL-Rahmen einer Gruppenadresse zugeordnet sind, und wobei das Verfahren ferner umfasst: Empfangen, von dem AP, eines Header-MIC-Werts, der einem Gruppenschlüssel zugeordnet ist; und Bestimmen, als Teil des Verifizierens, dass der eine oder die mehreren DL-Rahmen korrekt von dem AP empfangen wurden, dass der Header-MIC-Wert, der dem Gruppenschlüssel zugeordnet ist, mit einem Wert des Header-MIC-Felds übereinstimmt.

5. Verfahren nach Anspruch 1, wobei die Vielzahl von Parameterfeldern mindestens eine Adresse umfasst, und wobei das Verfahren ferner umfasst: Bestimmen, basierend auf einem Vergleich der mindestens einen Adresse mit einer Adresse der STA, mindestens eines der Folgenden: ob die STA ein beabsichtigter Empfänger des einen oder der mehreren DL-Rahmen ist oder nicht; oder ob der AP ein korrekter Sender des einen oder der mehreren DL-Rahmen ist oder nicht.

6. Verfahren nach Anspruch 1, wobei der eine oder die mehreren DL-Rahmen mindestens eines der Folgenden sind: ein Trigger-Rahmen; oder ein Blockbestätigungs-, BA-, Rahmen.

7. Verfahren nach Anspruch 1, wobei mindestens eines der Vielzahl von Parameterfeldern auf einen Wert von null eingestellt wird.

8. Verfahren nach Anspruch 1, wobei ein Wert eines der Vielzahl von Parameterfeldern um eins erhöht wird.

9. Verfahren, umfassend: durch einen Zugangspunkt, AP, (112): Übertragen (1202), an eine Nicht-Zugangspunkt-, Nicht-AP-, Station, STA, (106) eines Integritätsschutzes IP-Fähigkeitsanfrage; Empfangen (1204) einer IP-Fähigkeitsantwort von der Nicht-AP-STA, wobei die IP-Fähigkeitsantwort angibt, dass die Nicht-AP-STA eine oder mehrere IP-Fähigkeiten unterstützt; Anpassen (1206), basierend zumindest teilweise darauf, dass die Nicht-AP-STA die eine oder die mehreren IP-Fähigkeiten unterstützt, eines Werts mindestens eines Parameterfelds eines oder mehrerer Downlink-, DL-, Rahmen; und Übertragen (1208), an die Nicht-AP-STA, des einen oder der mehreren DL-Rahmen, wobei das mindestens eine Parameterfeld angepasst wird, um dem einen oder den mehreren DL-Rahmen IP bereitzustellen.

10. Verfahren nach Anspruch 9, wobei der Wert des mindestens einen Parameterfelds auf null eingestellt oder um eins erhöht wird.

11. Verfahren nach Anspruch 9, wobei der eine oder die mehreren DL-Rahmen Beacons sind, die während einer oder mehrerer Beacon-Perioden übertragen werden.

12. Verfahren nach Anspruch 11, wobei die Beacons eine oder mehrere Beacon-Integritätsschutznummern, BIPNs, umfassen, und wobei Werte des einen oder der mehreren BIPNs jeweils für Beacons, die nach einer ersten Beacon-Periode übertragen werden, um eins erhöht werden.

13. Verfahren nach Anspruch 12, wobei das eine oder die mehreren BIPNs und eine oder mehrere jeweilige Rahmennummern, FNs, in einer oder mehreren jeweiligen physikalischen Paketdateneinheiten, PPDUs, enthalten sind, wobei das eine oder die mehreren BIPNs sechs Oktette lang sind, und wobei das eine oder die mehreren jeweiligen FNs ein, zwei oder drei Oktette lang sind.

14. Prozessor, umfassend: Speicher, der Anweisungen speichert, die, wenn sie ausgeführt werden, eine Nicht-Zugangspunkt-, Nicht-AP-, Station, STA, veranlassen, das Verfahren nach einem der Ansprüche 1-8 durchzuführen.

15. Prozessor, umfassend: Speicher, der Anweisungen speichert, die, wenn sie ausgeführt werden, einen Zugangspunkt, AP, veranlassen, das Verfahren nach einem der Ansprüche 9-13 durchzuführen.

## Revendications

1. Un procédé, comprenant :
par une station, STA, non-point d'accès, non-AP, (106) :
la réception (1202), en provenance d'un point d'accès, AP, (112), d'une requête de capacité de protection d'intégrité, IP ;
la transmission (1204), au moins en partie sur la base de la STA non-AP qui supporte une ou plusieurs capacités d'IP, d'une réponse de capacité d'IP à l'AP ;
la réception (1208), en provenance de l'AP, d'une ou plusieurs trames de liaison descendante, DL, comprenant au moins un champ de paramètre ajusté d'une pluralité de champs de paramètre, l'au moins un champ de paramètre ajusté étant ajusté (1206) par l'AP au moins en partie sur la base de la STA non-AP qui supporte les une ou plusieurs capacités d'IP ; et
la vérification (1210), sur la base d'au moins une valeur du champ de paramètre ajusté qui a été ajusté par l'AP ou d'un ou plusieurs champs de paramètre de la pluralité de champs de paramètre, que les une ou plusieurs trames DL ont été correctement reçues en provenance de l'AP.

2. Le procédé de la revendication 1, dans lequel les une ou plusieurs trames DL comprennent un champ de vérification d'intégrité de message, MIC, d'entête et un champ de numéro de trame, FN.

3. Le procédé de la revendication 2, dans lequel, en tant que partie de la vérification que les une ou plusieurs trames DL ont été correctement reçues en provenance de l'AP, le procédé comprend en outre :
l'exécution d'un calcul de somme de contrôle d'intégrité à l'aide du champ MIC d'entête.

4. Le procédé de la revendication 2, dans lequel les une ou plusieurs trames DL sont associées à une adresse de groupe, et dans lequel le procédé comprend en outre :
la réception, en provenance de l'AP, d'une valeur de MIC d'entêtes associée à une clé de groupe ; et
la détermination, en tant que partie de la vérification que les une ou plusieurs trames DL ont été correctement reçues en provenance de l'AP, que la valeur de MIC d'entête associée à la clé de groupe concorde avec une valeur du champ de MIC d'entêtes.

5. Le procédé de la revendication 1, dans lequel la pluralité de champs de paramètre comprend au moins une adresse, et dans lequel le procédé comprend en outre :
la détermination, sur la base d'une comparaison de l'au moins une adresse avec une adresse de la STA, d'au moins l'un de ce qui suit :
si la STA est ou non un destinataire prévu des un ou plusieurs trames DL ; ou
si l'AP est ou non un émetteur correct des une ou plusieurs trames DL.

6. Le procédé de la revendication 1, dans lequel les une ou plusieurs trames DL sont au moins l'une d'entre :
une trame déclencheuse ; ou
une trame d'accusé de réception de bloc, BA.

7. Le procédé de la revendication 1, dans lequel au moins l'un de la pluralité de champs de paramètre est ajusté à une valeur zéro.

8. Le procédé de la revendication 1, dans lequel une valeur de l'un de la pluralité de champs de paramètre est augmentée d'une unité.

9. Un procédé comprenant :
par un point d'accès, AP, (112) :
la transmission (1202), à une station, STA, non-point d'accès, non-AP, (106), d'une requête de capacité de protection d'intégrité, IP ;
la réception (1204) d'une réponse de capacité d'IP en provenance de la STA non-AP, la réponse de capacité d'IP indiquant que la STA non-AP supporte une ou plusieurs capacités d'IP ;
l'ajustement (1206), au moins en partie sur la base de la STA non-AP qui supporte les une ou plusieurs capacités d'IP, d'une valeur d'au moins un champ de paramètre d'une ou plusieurs trames de liaison descendante, DL ; et
la transmission (1208), à la STA non-AP, des une ou plusieurs trames DL, l'au moins un champ de paramètre étant ajusté pour procurer une IP aux une ou plusieurs trames DL.

10. Le procédé de la revendication 9, dans lequel la valeur de l'au moins un champ de paramètre est ajusté à zéro ou augmenté d'une unité.

11. Le procédé de la revendication 9, dans lequel les une ou plusieurs trames DL sont des balises transmises pendant une ou plusieurs périodes de balise.

12. Le procédé de la revendication 11, dans lequel les balises comprennent un ou plusieurs numéros de protection d'intégrité de balise, BIPN, et dans lequel les valeurs des un ou plusieurs BIPN sont respectivement accrues d'une unité pour les balises transmises subséquemment à une première période de balise.

13. Le procédé de la revendication 12, dans lequel les un ou plusieurs BIPN et les un ou plusieurs numéros de trame, FN, respectifs sont inclus dans une ou plusieurs unités de données en paquets physiques, PPDU, respectives les un ou plusieurs BIPN ayant une longueur de six octets, et les un ou plusieurs FN respectifs ayant une longueur d'un, de deux, ou de trois octets.

14. Un processeur comprenant :
une mémoire stockant des instructions qui, lorsqu'elles sont exécutées, font en sorte qu'une station, STA, non-point d'accès, non-AP, mette en œuvre le procédé de l'une des revendications 1 à 8.

15. Un processeur, comprenant :
une mémoire stockant des instructions qui, lorsqu'elles sont exécutées, font en sorte qu'un point d'accès, AP, mette en œuvre le procédé de l'une des revendications 9 à 13.
